# EUROPÄISCHE PATENTSCHRIFT

(11) **EP 3 863 780 B1**
(45) Veröffentlichungstag und Bekanntmachung des Hinweises auf die Patenterteilung: **07.02.2024**
(21) Anmeldenummer: 19789915.6
(22) Anmeldetag: 14.10.2019
(51) Int. Cl.: B21J 5/12, B21J 7/14, B21J 13/00, B21K 1/06, B21K 1/22, F01L 3/14, B23P 15/00, B21H 1/00, B23P 9/02

(54) **VERFAHREN UND VORRICHTUNG ZUM EINPRÄGEN VON OBERFLÄCHENSTRUKTUREN IN EINE INNENSEITE EINES ROHRS ODER EINES VENTILSCHAFTS EINES TELLERVENTILS**
METHOD AND DEVICE FOR EMBOSSING SURFACE STRUCTURES INTO AN INSIDE OF A PIPE OR A VALVE SHAFT OF A POPPET VALVE
PROCÉDÉ ET DISPOSITIF POUR MATRICER DES STRUCTURES SUPERFICIELLES DANS UNE FACE INTÉRIEURE D'UN TUBE OU D'UNE TIGE DE SOUPAPE DE MOTEUR

(30) Priorität: 11.02.2019 DE 102019103240
(43) Veröffentlichungstag der Anmeldung: 18.08.2021
(73) Patentinhaber: Federal-Mogul Valvetrain GmbH, 30890 Barsinghausen (DE)
(72) Erfinder: MATTHIAS, Thorsten, 30826 Garbsen (DE); WOLKING, Antonius, 30890 Barsinghausen (DE)
(74) Vertreter: Kurig, Thomas
(86) Internationale Anmeldenummer: PCT/EP2019/077779
(87) Internationale Veröffentlichungsnummer: WO 2020/164762

(56) Entgegenhaltungen:
- WO-A1-2019/001780
- JP-A- 2001 295 615
- JP-A- 2004 148 385
- US-A- 2 367 783
- US-A1- 2015 165 507

## Beschreibung

Die vorliegende Erfindung betrifft ein Verfahren und eine Vorrichtung zum Einprägen von Oberflächenstrukturen in eine Innenseite eines Rohrs oder eines Ventilschafts eines innengekühlten Tellerventils und ein innengekühltes Tellerventil mit einer derart eingeprägten Innenstruktur.

Innenstrukturen können in Rohren beispielweise beim Gießen mit einem verlorenen Kern hergestellt werden. Dies ist jedoch nur bei Rohren aus Materialien möglich, die gegossen werden können. Auch ist eine Entfernung der Kerne nicht ohne eine Zerstörung der Kerne möglich. Gerade bei Werkstücken mit einer großen Länge und einem geringen Durchmesser kann ein Gießvorgang zudem problematisch werden.

Innenstrukturen von Rohren können bisher über Räumahlen oder durch Hämmern auf Domen hergestellt werden. Dies ist jedoch nur bei in Axialrichtung durchgängigen oder gleichmäßigen Strukturen wie den Zügen in Gewehr- oder Kanonenläufen möglich. Beim Hämmern würde ein verlorener Kern zerstört werden, noch bevor er eine Form auf einer Innenseite des Rohrs abbilden könnte. Bei herkömmlichen Laufhämmer- bzw. Langschmiedemaschienen werden die Züge durch einen Dorn mit der Form der Züge auf einer Innenseite des Laufs abgeformt. Der Dorn wird dabei stark belastet. Da sich die Züge über den gesamten Lauf erstrecken, kann der Dorn am Enden des Schmiedevorgangs aus dem Lauf gezogen werden. Läufe mit einer Strukturierung in Laufrichtung sind hingegen nicht möglich, da sonst das Geschoss nicht durch den Lauf passen würde, bzw. der Dorn beim Schmieden in dem Lauf ein - bzw. angeschmiedet werden würde.

Aus dem Stand der Technik sind verschiedene Verfahren bekannt, um ein Werkstück herzustellen. Die gattungsgemäße japanische Patentanmeldung JP 2004 148385 A offenbart ein Prägewerkzeug und ein Verfahren bei dem eine Struktur in ein rohrförmiges Bauteil durch ein Innenprägewerkzeug eingeprägt wird, um ein hydrodynamisches Lager herzustellen.

Die japanische Patentanmeldung JP 2001295615 A betrifft ein Verfahren bei dem ein zerlegbarer Tiefziehstempel verwendet wird, um einen innenstrukturierten Ventilstößel herzustellen.

Aus der amerikanischen Patentanmeldung US 2015165507 A1 ist ein Verfahren bekannt bei dem eine Montagebohrung aufgeweitet wird um die Montagebohrung durch eingebrachte Eigenspannungen zu verfestigen.

Aus der internationalen Anmeldung WO 2019001780 A1 und der amerikanischen Anmeldung US 2367783 A sind Verfahren bekannt um einen Hohlraum eines innengekühlten Ventils mit einer Längsstrukturierung zu versehen. Hier wird ein strukturierter Dorn in den Hohlraum eingesetzt wird und in einem weiteren Arbeitsschritt das Material eines Ventilschafts unter einer Verjüngung des Ventilschafts auf den Dorn gepresst. Bei Rohren mit einer geringen Länge und großen Durchmesser ist es möglich eine beliebige Innenstruktur spanend herzustellen, notfalls indem man einen Arbeiter mit einer Schleifmaschine und einer Schablone in das Rohr setzt.

Ansonsten gibt es derzeit kein Verfahren und keine Vorrichtung eine beliebige Strukturierung an einer Innenfläche eines Rohr anzubringen. Es ist daher wünschenswert ein derartiges Verfahren zur Verfügung zu haben. Es ist weiterhin wünschenswert ein Verfahren zur Verfügung zu haben das es ermöglicht einfach eine Innenseite von Hohlraumventilen mit einer Struktur zu versehen.

Die Aufgabe der vorliegenden Erfindung wird gelöst durch ein Prägewerkzeug mit den Merkmalen des Anspruchs 1, eine Prägemaschine mit den Merkmalen des Anspruchs 7 und ein Verfahren zum Einprägen einer Struktur auf eine Innenseite eines Rohrs oder eines Innengekühlten Ventils mit den Merkmalen des Ansprchs 8. Vorteilhafte Ausführungsformen sind in den abhängigen Ansprüchen beschrieben.

Gemäß einem ersten Aspekt der vorliegenden Erfindung wird ein Prägewerkzeug zum Einprägen einer Struktur in einer Innenseite eines Rohrs bereitgestellt. Das Prägewerkzeug umfasst dabei mindestens drei Prägestempel sowie einen Keil. Jeder der mindestens drei Prägestempel umfasst dabei in Radialrichtung eine außenliegende Stempel- oder Prägefläche die mit einer Strukturierung versehen ist. Die Strukturierung entspricht dabei einer Negativform der auf der Innenseite einzuprägenden Struktur. Die Stempelfläche ist dabei um eine Gerade gekrümmt, die parallel zu einer Mittenachse des Prägewerkzeugs ist. Jeder der Prägestempel umfasst zwei Flankenflächen, die in einem Winkel zueinander stehen und deren Schnittlinie ebenfalls parallel zu der Mittenachse ist. Die Prägestempel weisen weiter eine Keil-Innenfläche auf, die zu der Mittenachse geneigt ist und die die zwei Flankenflächen jeweils in einem gleichen Winkel schneidet. Die Innenflächen sind bei allen Prägestempeln eines Prägewerkzeugs gleich zu der Mittenachse geneigt. Die Mittenachse schneidet die Ebene, die durch die Keil-Innenfläche aufgespannt wird, in einem kleinen spitzen Winkel. Das Prägewerkzeug umfasst weiter einen Keil, mit Keil-Außenflächen die im gleichen Winkel wie die Keil-Innenflächen der Prägestempel zu der Mittenachse geneigt sind.

Jede der Keilaußenflächen steht zu jeder ihrer benachbarten Keilaußenflächen in einem gleichen Winkel. Bei einem Schnitt senkrecht zu der Mittenachse ergeben sich daher Polygone mit gleichen Winkeln, bevorzugt regelmäßig konvexe Vielecke.

Die Mittenachse schneidet die Ebene, die durch die Keil-Innenfläche aufgespannt wird in einem kleinen Winkel, zwischen 0,1° und 10°, bevorzugt zwischen 1° und 7° und weiter bevorzugt zwischen 2° und 5°.

Das Prägewerkzeug weist außderdem eine teilweise konische Stempel- oder Prägefläche auf.

Bildlich gesprochen betrifft diese Ausführung der vorliegenden Erfindung eine Art "inverse Spannzange" die innen in ein Rohr gesteckt wird, und die von einem Keil gegen die Innenfläche eines Rohrs gedrückt wird, wobei eine Struktur auf der Außenseite der Spannzange eine Struktur auf das Werkstück also die Innenseite des Rohrs einprägt.

In einer Ausführung des Prägewerkzeug ist die Stempelfläche um die Mittenachse selbst gekrümmt, und die Flankenflächen spannen Ebenen auf deren Schnittlinie mit der Mittenachse zusammenfällt. Hier bilden die Prägestempel in einem zusammengefahrenen Zustand im Wesentlichen einen Kreiszylinder. Bei einem Spannen der Zange werden die Prägestempel nach außen gedrückt und prägen die Struktur in die Innenseite des Rohrs ein. Je kleiner die Prägetiefe der Struktur desto geringer die notwendige Bewegung der Prägestempel in Axialrichtung und desto flacher kann der Keil ausgeführt werden, und desto höhere Prägedrücke können erzielt werden. Diese Ausführung hat den Nachteil, dass die Krümmungsradien der Prägestempel nicht mit dem möglicherweise aufgeweiteten Innendurchmesser des Rohrs zusammenfallen.

Bei einer anderen Ausführungsform des Prägewerkzeugs ist die Stempelfläche bei einem zusammengefahrenen Prägewerkzeug um eine Achse gekrümmt, die hinter der Mittenachse liegt. In dieser Ausführung ist das Prägewerkzeug in Ruhe und hier bilden die Prägestempel in einem auseinandergefahrenen Zustand im Wesentlichen einen Zylinder. Durch das zusammenfahren der Prägeflächen der Prägestempel bzw. Radial-Prägestempel entsteht ein Polygon, das anstelle von geraden durch Kreislinien begrenzt ist, nicht unbedingt jedoch ein Bogenpolygon bildet, da die Mittelpunkte der Kreise nicht auf den Ecken des Polygons liegen müssen bzw. werden. Hier ist die fertig geprägte Innenfläche des Rohrs bis auf die Struktur und die Bereiche zwischen den Stempeln kreisförmig.

Hier zeigt sich auch eine konstruktionsbedingte Eigenheit des Systems, nämlich, dass sich die Prägestempel beim Prägen voneinander entfernen und in Radialrichtung zwischen den Prägestempeln Spalten entstehen, in denen das Material nicht geprägt wird.

In einer weiteren Ausführung des Prägewerkzeugs ist die Stempelfläche um eine Achse gekrümmt, wobei die Winkel jeweils zweier Flankenflächen eines Prägestempel 360° geteilt durch die Anzahl der Prägestempel in dem Prägewerkzeug entspricht. Hier ist jeder Prägestempel in Umfangsrichtung gleich breit. In einer weiteren Ausführung bilden die Schnittlinien zweiter benachbarter Keilaußenflächen mit einer Ebene, die senkrecht zu der Mittenachse steht 180° mal der Differenz aus der Anzahl der Prägestempel minus 2 geteilt durch die Anzahl der Prägestempel entspricht, also den Winkel = 180° (n-2)/n, wenn n für die der Anzahl der Prägestempel steht. Bei 3 Prägestempeln wäre dies 60°, bei 4 Prägestempeln wäre dies 90°, bei fünf Prägestempeln 72° und so weiter.

In einer Ausführung umfasst die Strukturierung eine Variation des Radius entlang der Längsrichtung und jeder Helixrichtung. Dieses negative Merkmal soll definieren, dass es nicht möglich ist, das Prägewerkzeug in einem ausgefahrenen Zustand in einer Längs- oder Schraubenrichtung aus dem Rohr zu ziehen. Dieses Merkmal dient also unter anderem dazu, das Prägewerkzeug von entsprechenden Kernen von Laufschmiedeanlagen zu unterscheiden, bei denen die Züge durch Hämmern oder Rundkneten bzw. Langschmieden auf einem Dorn in das Rohr eingebracht werden, wobei der Dorn aber bezüglich einer Helixbewegung durch den fertig gehämmerten Lauf geschoben oder gezogen werden könnte. Es kann auch ein Drückwalzen als Verjüngungsverfahren verwendet werden.

Eine weitere Ausführung betrifft ein Prägewerkzeug, das weiter eine hohle Außenform umfasst. Diese Außenform ist dabei bevorzugt rund und dient dazu das innen zu prägende Rohr beim Prägevorgang aufzunehmen. Die Außenform dient als Widerlager und verhindert, dass sich das Rohr lediglich weitet, anstatt die Struktur an der Innenseite einzuprägen. Durch die Außenform kann das Rohr dem durch das Prägewerkzeug ausgeübten Druck nicht nach außen ausweichen, was den Prägevorgang vor allem bei geringen Wandstärken deutlich verbessert.

Gemäß einem weiteren Aspekt der vorliegenden Erfindung wird eine Prägemaschine, umfassend das vorstehend beschriebene Prägewerkzeug bereitgestellt.. Die Prägemaschine umfasst mindestens eine Vorschubeinrichtung für den Keil, um diesen gegenüber den Prägeteilen vorzuschieben. Es kann weiterhin eine Einrichtung vorgesehen sein die eine Bewegung der Prägestempel und/oder des Rohrs und/oder der Außenform verhindert. Es ist ebenfalls möglich die Prägestempel und das Rohr gegenüber dem Keil zu verschieben. Je nach Ausführung der Prägemaschine bzw. des zu prägenden Rohrs kann lediglich ein Anschlag vorgesehen sein, der eine Bewegung des Rohrs und/oder der Prägestempel in einer Vorschubrichtung des Keil verhindert. Der Keil kann als Schub- oder Zugkeil ausgeführt sein.

Gemäß einem weiteren Aspekt der vorliegenden Erfindung umfasst das Verfahren zu Prägen einer Innenseite eines Rohres ein Einbringen mindestens dreier Prägestempel, die jeweils an einer Außenfläche eine Struktur aufweisen, in ein Rohr, wobei die Prägestempel im Wesentlichen an Flankenflächen aneinander liegen, und wobei zwischen Innenseiten der Prägestempel ein Hohlraum bzw. Platz verbleibt. Die Prägestempel können durch Stäbe oder Führungen mit der Maschine verbunden sein, um eine Bewegung in Axialrichtung zu verhindern oder zu erschweren. Dann wird ein Keil in den Hohlraum zwischen die Innenseiten der Prägestempel eingeschoben und durch eine Bewegung des Keils in eine Axialrichtung, werden die Prägestempel auseinandergepresst. Beim Auseinanderpressen der Prägestempel wird die Struktur der Außenfläche der Prägestempel in die Innenseite des Rohrs eingeprägt bzw. eingestempelt. Die Führung in Axialrichtung ist nur anfänglich notwendig, da durch einen geringen Keilwinkel die Prägestempel alleine durch die Struktur der Stempel- bzw. Außenflächen sich so in dem Rohr verkeilen, dass sie sich nicht in Axialrichtung verschieben werden.

Für alle Personen, denen eine Würgezange zur Befestigung einer Sprengkapsel auf einer Zündschnur bekannt ist, betrifft das Verfahren genau einen umgekehrten Fall bei dem ein Rohr von innen nach außen geprägt, also quasi "ausgewürgt" wird. Hier wird die Spannzange nicht von außen in einen Konus geschoben, um das offene Ende der Sprengkapsel auf der Zündschnur zu befestigen, sondern die Spannzange wird von einem Kegel innen nach außen gedrückt, um auf der Innenseite eine oder mehrere Vertiefungen einzuprägen.

Gemäß einer nicht beanspruchten Ausführungsform eines Verfahrens umfasst dieses weiter ein Herausfahren des Keils zwischen den Innenseiten der Prägestempel, und dann ein Einbringen eines zweiten größeren Keils zwischen den Innenseiten der Prägestempel, gefolgt von einem Auseinanderpressen der Prägestempel durch eine Bewegung des größeren Keils in eine Axialrichtung, wobei die Struktur der Außenfläche der Prägestempel in die Innenseite des Rohrs tiefer eingeprägt (bzw. eingestempelt) wird. Diese Ausführung dient dazu ein tieferes Relief bzw. eine tiefere Struktur in die Innenseite des Rohrs einzuprägen. Es ist auch möglich einen dritten Keil zu verwenden, um eine weitere Vertiefung der Einprägungen zu ermöglichen. Diese Ausführung dient dazu vor allem an einem verschlossenen Ende eines Rohrs oder Ventilschafts eine Einprägung anzubringen, wenn nicht genügend Raum in Axialrichtung vorhanden ist um, den Keil hinreichend weit bewegen zu können.

Das erfindungsgemäße Verfahren umfasst weiter ein Herausfahren bzw. ein Zurückfahren des Keils zwischen den Innenseiten der Prägestempel, weiter ein Versetzen der Prägestempel in Axial- und/oder Umfangsrichtung. Dann wird der Keil wieder zwischen die Innenseiten der versetzten Prägestempel hereingefahren und die P Prägestempel werde durch eine Bewegung des Keils in eine Axialrichtung auseinandergepresst, wobei die Struktur der Außenfläche der Prägestempel in die Innenseite des Rohrs eingeprägt (bzw. eingestempelt) wird. Diese Ausführung des Verfahrens dient dazu mit einem relativ kurzen Prägewerkzeug relativ lange Rohre innen zu prägen. Es kann bei langen Rohren und kurzen Prägewerkzeugen von Vorteil sein einen Zugkeil zu verwenden. Bei kürzeren Rohren bzw. Prägewerkzeugen können Druckkeile von Vorteil sein. Der Keil kann auch durch eine oder mehrere Schlagbewegungen zwischen die

Prägestempel getrieben werden. >> Gemäß einem weiteren Aspekt der vorliegenden Erfindung wird ein Rohr mit einer auf einer Innenseite eingeprägten Struktur bereitgestellt, das mit dem vorstehend beschriebenen Prägewerkzeug der vorstehend beschriebenen Prägemaschine oder dem vorstehend beschriebenen Prägeverfahren hergestellt ist. Es ist anhand der Ausführung der Prägung und eventuell der Kristallstruktur des Rohr erkennbar. Insbesondere die Herstellung einer Struktur, die nicht durch einen Gewindeschneider oder einen herkömmlichen Dorn hergestellt werden kann sind Anzeichen dafür dass das vorliegende Verfahren genutzt wurde.

Gemäß einer weiteren Ausführungsform bildet das Rohr einen Teil des Schaftes eines innengekühlten Tellerventils, wobei das erfindungsgemäße Prägewerkzeug dazu verwendet wurde an einer Innenseite des hohlen Schafts des Tellerventils eine Struktur einzuprägen. Ein besonders wichtiger Teil besteht darin, dass der Schaft innen mit einer Struktur versehen wird, die nicht mit herkömmlichen Werkzeugen hergestellt werden kann, und die durch eine Vergrößerung der Innenfläche einen Wärmeübertrag zwischen einem Kühlmittel und einem Ventilschaft erhöhen kann, wobei insbesondere Strukturen möglich sind, die ein Entfernen herkömmlicher Kerne nur durch eine Zerstörung ermöglichen würden.

Gemäß einem anderen nicht-beanspruchten Aspekt der vorliegenden Offenbarung wird ein Prägezylinder zum Einprägen einer Struktur in einer Innenseite eines Rohrs bereitgestellt. Der Prägezylinder ist mehrteilig ausgeführt und umfasst Prägeteile und ein bzw. mindestens ein Stützelement. Die Prägeteile sind bei einem zusammengesetzten Prägezylinder um das Stützelement angeordnet. Die aneinander angeordneten Prägeteile bilden zusammen an ihren Radial-Außenseiten eine Zylindermantel-Prägefläche, die eine Prägestruktur mit einer Radialhöhenvariation mindestens in einer Axialrichtung der Zylinder-Mantelfläche aufweisen. Es wird hier also nicht nur ein Dorn sondern ein Prägezylinder bereitgestellt der eine Radiusvariation entlang der Axialrichtung aufweist. Der zusammengesetzte Prägezylinder kann in seine Einzelteile zerlegt werden, indem zuerst das Stützelement in einer Axialrichtung oder einer Helikalrichtung, also in einer Schraubenbewegung zwischen den Prägeteilen herausgezogen wird, und nachfolgend die Prägeteile zuerst in einer Radialrichtung und dann in einer Axialrichtung oder Helikalrichtung herausgezogen werden können. Hier ist vor allem die Bewegung der Prägeteile in Radialrichtung hervorzuheben, da es dies nach einer Strukturierung / Prägung in Radialrichtung/ Axialrichtung ermöglicht, den Prägezylinder und die Prägeteile nach dem Prägevorgang aus der Innenseite des Rohrs herauszuziehen, obwohl sie durch die Prägung an einer direkten Verschiebung in einer Axialrichtung gehindert wären. Der Prägezylinder kann keine Kraft in Radialrichtung aufbauen, jedoch Kraft in Radialrichtung aufnehmen. Hier dient der Prägezylinder nicht als Stempel sondern als Form auf das die Innenseite eines Rohrs aufgedrückt wird.

Bei einer nicht beanspruchten Ausführungsform des Prägezylinders weisen Flankenflächen der Prägeteile, an denen zwei Prägeteile bei zusammengesetztem Prägezylinder aneinander liegen Eingriffsstrukturen auf, an denen die jeweiligen Prägeteile ineinandergreifen. Die Eingriffsstrukturen gestatten dabei aber eine Bewegung in Radialrichtung oder einer kombinierten Axial-Radialrichtung. Die Eingriffsstrukturen sollen dabei eine Bewegung der Prägeteile bei radialer oder einseitig radialer Belastung verringern. Hier können Wellen-Polygon oder Hakenstrukturen verwendet werden, die ein axiales verschieben unmöglich machen. Es ist ebenfalls möglich Haken- Leistenstrukturen zu nutzen die in Radialrichtung ineinandergreifen, sodass die Teile nur in einer bestimmten Reihenfolge in Radialrichtung eingesetzt werden können.

Bei einer zusätzlichen nicht beanspruchten Ausführung des Prägezylinders weist mindestens eine Innenfläche eines Prägeteils und eine Außenfläche des Stützelements entsprechende Eingriffsstrukturen auf. Die Eingriffsstrukturen stehen bei zusammengesetztem Prägezylinder in Eingriff, wobei der Eingriff zwischen dem mindestens einen Prägeteil und dem Stützelement eine Bewegung des Stützelements gegenüber den Stützelementen in einer Axialrichtung oder eine Helikalrichtung gestattet. Auch hier wirken das Stützelement und die Prägeteile durch die Eingriffsstrukturen zusammen um eine Verschiebung der Prägeteile gegeneinander und gegenüber dem Stützelement in Radial- und Umfangsrichtung zu vermeiden. Dies kann beispielsweise durch Längsrippen umgesetzt werden, die in Axialrichtung verlaufen, und die eine Axialbewegung des Stützteils nicht beinträchtigen. Bevorzugt ist das Stützelement ähnlich wie bei dem vorstehend beschriebenen Prägewerkzeug konisch, um nach der Prägung das Stützelement leichter entfernen zu können. Es ist jedoch auch möglich das Stützelement mit einem Außengewinde zu versehen, wobei die Innenflächen der zusammengesetzten Prägeteile in dieser Ausführung ein Innengewinde bilden. In bevorzugten Ausführungen kann hier ein konisches Gewinde eingesetzt werden, um das Stützelement zwischen die Prägeteil einzuschrauben.

Gemäß einem weiteren nicht beanspruchten Aspekt der vorliegenden Offenbarung wird ein Aktuator als Teil einer Prägemaschine bereitgestellt, der eingerichtet ist die Prägeteile in einer richtigen Reihenfolge in einer Axial und Radialbewegung in ein Rohr einzuführen bis alle Prägeteile einen Zylinder bilden, und dann ein Stützelement in einer Axial- oder Helikalrichtung zwischen die Prägeteile einzuschieben. Der Aktuator umfasst dabei mindestens drei Komponenten die eine kombinierte Axial-Radialbewegung ausführen können und mindestens ein Element, das eine Axialbewegung ausführen kann.

Gemäß einem weiteren nicht beanspruchten Aspekt der vorliegenden Offenbarung wird eine Prägemaschine bereitgestellt, mit dem vorstehend beschriebenen Prägezylinder, einem Aktuator, um den Prägezylinder zusammenzusetzen bzw. zu zerlegen, sowie einer Verjüngungsvorrichtung um ein Rohr in dem sich der Prägezylinder befindet zu verjüngen. Die Verjüngungsvorrichtung ist dazu ausgelegt, einen Außendurchmesser eines Rohres soweit zu verringern, bis eine Innenfläche des Rohrs so stark auf die strukturierte Außenfläche des Prägezylinders aufgepresst wird, dass die Strukturierung auf dem Prägezylinder auf der Innenseite des Rohrs eingeprägt wird. Die Prägemaschine bzw. der Aktuator ist dazu ausgelegt, den Prägezylinder durch Herausziehen des Stützelements und der Prägeteile innerhalb des Rohrs zu zerlegen, und so nach und nach aus dem Rohr herauszuziehen. Es ist ebenfalls möglich das Rohr von den Prägeteilen bzw. von einem zerlegten Prägezylinder abzuziehen. Dies ist nur möglich da die Prägeteile des Prägezylinders nacheinander zuerst in einer Radialrichtung nach innen und dann in einer Axialrichtung nach außen aus dem Rohr herausgezogen werden können. Die Prägemaschine kann ebenfalls dazu ausgelegt sein, den Prägezylinder außerhalb des Rohrs zusammenzusetzen und ein noch nicht verjüngtes Rohr auf den Prägezylinder aufzuschieben, und dann zu verjüngen. Die Zerlegung des Prägezylinders ist nur für eine Entnahme des Prägezylinders aus dem verjüngten und geprägten Rohr unumgänglich.

Bei einer Ausführung der Prägemaschine ist die Verjüngungsvorrichtung als eine Hämmervorrichtung ausgeführt wie sie von Laufhämmeranlagen bekannt ist.

Bei einer Ausführung der Prägemaschine ist die Verjüngungsvorrichtung als eine Rundknet- oder Rundschmiedevorrichtung ausgelegt.

Bei einer Ausführung der Prägemaschine ist die Verjüngungsvorrichtung als eine Zugdruckumformvorrichtung wie beispielsweise eine Ziehvorrichtung oder eine Necking-Vorrichtung ausgelegt, bei der das Rohr oder ein Ventilschaft durch eine Matrize gezogen wird um den Rohraußendurchmesser bzw. den Schaftdurchmesser soweit zu verringern, dass die Struktur des Prägezylinders auf der Rohrinnenfläche eingeprägt wird.

Bei einer Ausführung der Prägemaschine ist die Verjüngungsvorrichtung als eine Rundquerwalzvorrichtung ausgeführt bei der das Rohr und der Prägezylinder beim Rundquerwalzen zusammen rotieren. Hier wird das Rohr bzw. der Schaft durch das Querwalzen verjüngt.

Der Aktuator kann bei allen Ausführungen dazu ausgelegt sein den Prägezylinder so zu bewegen, dass er jeder Bewegung des Rohrs beim Verjüngen in Axial oder Umfangsrichtung folgt.

Weiterhin wird ein Verfahren zum Prägen einer Innenfläche eines Rohrs bereitgestellt. Das Verfahren kann kurz beschrieben werden indem der Prägezylinder in ein Rohr eingebracht wird, das Rohr durch Radialkräfte verjüngt wird, bis sich die Innenseite des Rohrs an die Strukturierung des Prägezylinders angepasst hat, gefolgt von einem Auseinandernehmen des Prägezylinders in dem Rohr gefolgt von einer Entnahme der Stütz- und Prägeteile aus dem Rohr.

In einem ersten Schritt wird der Prägezylinder in das Rohr eingebracht, indem das Rohr auf den Zylinder gesteckt wird oder der Zylinder in das Rohr gesteckt wird oder der Zylinder in dem Rohr zusammengesetzt wird. Dann wird der Außendurchmessers des Rohrs durch Hämmern, Rundkneten, Zugdruckumformen, Ziehen oder Rundquerwalzen, verjüngt bis sich eine Innenfläche des Rohrs soweit verjüngt hat, dass eine Struktur auf einer Außenseite des Prägezylinders auf der Innenseite des Rohrs eingeprägt ist. Nachdem sich die Struktur des Prägezylinders innen in dem Rohr ausgeprägt hat, wird der Prägezylinder in dem Rohr zerlegt, indem das Stützelement und die Prägeteile nacheinander aus dem Rohr gezogen werden. Während das Stützelement in einer Axialbewegung oder einer Schraubbewegung herausgezogen werden kann, müssen die Prägeteile nacheinander zuerst radial nach innen und dann axial aus dem Rohr herausgezogen werden.

In einer Ausführung des Verfahrens wird lediglich ein Teil des Rohrs verjüngt, in dem sich der Prägezylinder befindet. In dieser Ausführung umfasst das Verfahren weiter ein Zusammensetzen des Prägezylinders an einem Ort oder in einem Bereich des Rohrs der gegenüber einem bereits verjüngten bzw. eingeprägten Abschnitt versetzt ist. Beim Zusammensetzen steht maximal ein Teil der Außenstruktur des Prägezylinders mit einer bereits in die Innenfläche des Zylinders eingeprägten Struktur in Eingriff. Nachdem der Prägezylinder wieder zusammengesetzt ist wird ein weiterer Abschnitt oder der Rest des Außendurchmessers des Rohrs verjüngt und dadurch innen geprägt. Dieser Teil des Verfahrens kann öfter wiederholt werden, bis ein gewünschter Abschnitt des Rohrs oder das gesamte Rohr innen geprägt ist.

Gemäß einem weiteren nicht beanspruchten Aspekt der vorliegenden Offenbarung wird ein Rohr mit einer auf einer Innenseite eingeprägten Struktur bereitgestellt, das mit dem vorstehend beschriebenen Prägezylinder der vorstehend beschriebenen Prägemaschine oder dem vorstehend beschriebenen Prägeverfahren hergestellt ist. Es ist anhand der Ausführung der Prägung und eventuell der Kristallstruktur des Rohr erkennbar, wie die Prägung auf der Innenseite hergestellt wurde. Insbesondere die Herstellung einer Struktur, die nicht durch einen Gewindeschneider oder einen herkömmlichen Dorn hergestellt werden kann sowie Bearbeitungszeichen einer Durchmesserverjüngung mit Bearbeitungsspuren und Kristallformen sind Anzeichen dafür dass das vorliegende Verfahren genutzt wurde.

Gemäß einer weiteren nicht beanspruchten Ausführungsform bildet das Rohr einen Teil des Schaftes eines innengekühlten Tellerventils, wobei der erfindungsgemäße Prägezylinder und eine Verjüngungsmaschine dazu verwendet wurde an einer Innenseite des hohlen Schafts des Tellerventils eine Struktur einzuprägen. Ein besonders wichtiger Teil besteht darin, dass der Schaft innen mit einer Struktur versehen wird, die nicht mit herkömmlichen Werkzeugen hergestellt werden kann, und dass man durch eine Vergrößerung der Innenfläche einen Wärmeübertrag zwischen einem Kühlmittel und einem Ventilschaft erhöhen kann, wobei es insbesondere anhand der Metallstrukturen möglich sind, das Herstellungsverfahren an dem fertigen Ventil nachzuweisen.

Im Folgenden wird die vorliegende Erfindung anhand von schematischen nicht maßstabgerechten Figuren dargestellt.
Figuren 1A bis 13J zeigen verschiedene Ausführungen von erfindungsgemäßen Prägewerkzeugen, Prägezylindern und verdeutlichen das erfindungsgemäßer Verfahren zur Herstellung von innengeprägten Rohren und Hohlventilen.
Die Figuren 1A und 1B zeigen die Einzelteile eines erfindungsgemäßen Prägewerkzeugs.
Die Figuren 2A bis 2D stellen die Funktionsweise des Prägewerkzeugs 4 in einer axialen Aufsicht dar.
Die Figuren 3A bis 3F bzw. bis 3K stellen die Wirkungsweise des Rohr-Innenprägewerkzeugs 4 und damit zwei Ausführungen eines Prägevorgangs dar.
Figuren 4A bis 4F zeigen das Verfahren in einer abgewandelten Ausführung eines Prägevorgangs in einer Längs-Schnittansicht.
Figuren 5A bis 5C zeigen ein Prägeverfahren mit einem Langkeil 42 in einer Längs-Schnittansicht.
Figuren 6A bis 6C zeigen ein Schritt-Prägeverfahren mit einem Langkeil 42.
Die Figuren 7A bis 7H stellen ein weiteres Prägeverfahren mit einer Außenform dar.
Die Figuren 8A bis 8E entsprechen einer Längs-Schnittansicht den des Prägevorgangs wie er in den Figuren 7D bis 7H in einer Querschnittsansicht dargestellt ist.
Die Figuren 9A bis 9D zeigen einen Prägezylinder und einen mögliches Zusammensetzen des Prägezylinders aus Prägeteilen in einem Rohr.
Die Figuren 10 und11 zeigen andere mögliche Konfigurationen Prägeteilen die einen Prägezylinder bilden können.
Die Figuren 12A bis 14B stellen verschiedene Möglichkeiten eines Innenprägeverfahrens mit einem Prägezylinder dar.

Sowohl in den Figuren als auch in der Beschreibung werden gleiche oder ähnliche Bezugszeichen verwendet um auf gleiche oder ähnliche Elemente und Komponenten Bezug zu nehmen.

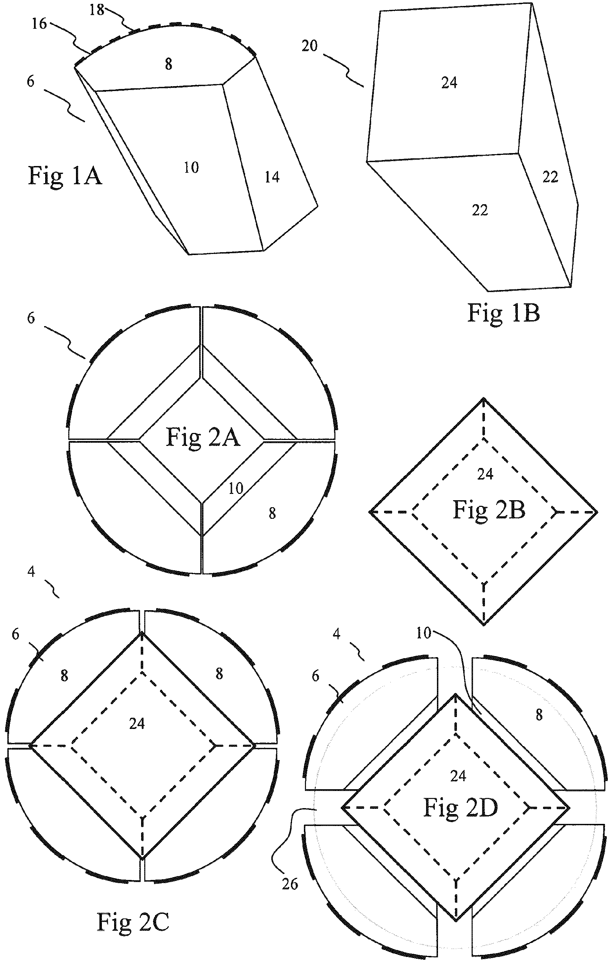

Die Figuren 1A und 1B zeigen die Einzelteile eines erfindungsgemäßen Prägewerkzeugs.

Figur 1A zeigt eine perspektivische Ansicht eines Prägestempels 6 eines Prägewerkzeugs 4, wobei die Ansicht eine Innenfläche 10 und zwei Flankenflächen 14 darstellt. An dem oberen Rand ist die Mantelfläche 16 mit einer Strukturierung 18 angedeutet. Der dargestellte Prägestempel bildet einen Zylinder mit einem ¼-Kreis-Segment der an einer Innenfläche schräg abgeschnitten ist. Also bildet der Prägestempel im Wesentlichen eine Art Kuchenstück dessen Spitze schräg abgetrennt wurde, wobei die Mantelfläche die Prägefläche mit der Strukturierung bildet.

Figur 1A zeigt eine perspektivische Ansicht eines Keils 20, mit den Keilaußenflächen 22 und der Keilstirnfläche 24. Der Keil bildet einen Pyramidenstumpf.

Die Figuren 2A bis 2D stellen die Funktionsweise des Prägewerkzeugs 4 in einer axialen Aufsicht dar.

In der Figur 2A sind vier Prägestempel 6 dargestellt die an ihren Flankenflächen aneinander liegen, sodass die Mantel- bzw. Prägeflächen 16 sich bis auf die Kontaktstellen zu einer vollständigen Mantelfläche ergänzen. In der Aufsicht sind die Prägestempel-Stirnflächen 8 zu erkennen. Die zusammengelegten Prägestempel 6 bilden einen Zylinder, wobei die Keil-Innenflächen 10 zueinander weisen und ein pyramidenstumpfförmigen Hohlraum bilden. Die Mantel- bzw. Prägeflächen 16 sind mit einer Strukturierung versehen, die einen entsprechenden Abdruck in einem Rohr hinterlassen soll.

In der Figur 2B ist ein Keil 20 dargestellt wobei lediglich die Stirnfläche 24 zu erkennen ist, die vier Keil-Außenflächen sind nur durch die gestrichelte Linie angedeutet.

Die Figur 2C zeigt den Keil von der Figur 2B, wie er in den Hohlraum der Prägestempelanordnung der Figur 2A eingesetzt ist, damit stellt die Figur 2C das Prägewerkzeug 4 zu Beginn eines Prägevorgangs dar.

Die Figur 2D zeigt den Keil von der Figur 2B, wie er in Axialrichtung in den Hohlraum der Prägestempelanordnung der Figur 2A eingeschoben ist, und die Prägestempel von Figur 2A weit nach außen geschoben hat. Dies zeigt eine Situation am Ende eines Prägevorgangs. Die Keilinnenflächen 10 der Prägestempel 5 sind sichtbar, da der Keil soweit zwischen die Prägestempel 6 eingeschoben ist, dass die Keil-Stirnfläche 24 tiefer liegt als die Prägestempel-Stirnflächen 8 der Prägestempel 6.

Die Figuren 2A bis 2D stellen die Wirkungsweise des Rohr-Innenprägewerkzeugs 4 dar, ohne dass es in ein Rohr eingesetzt ist.

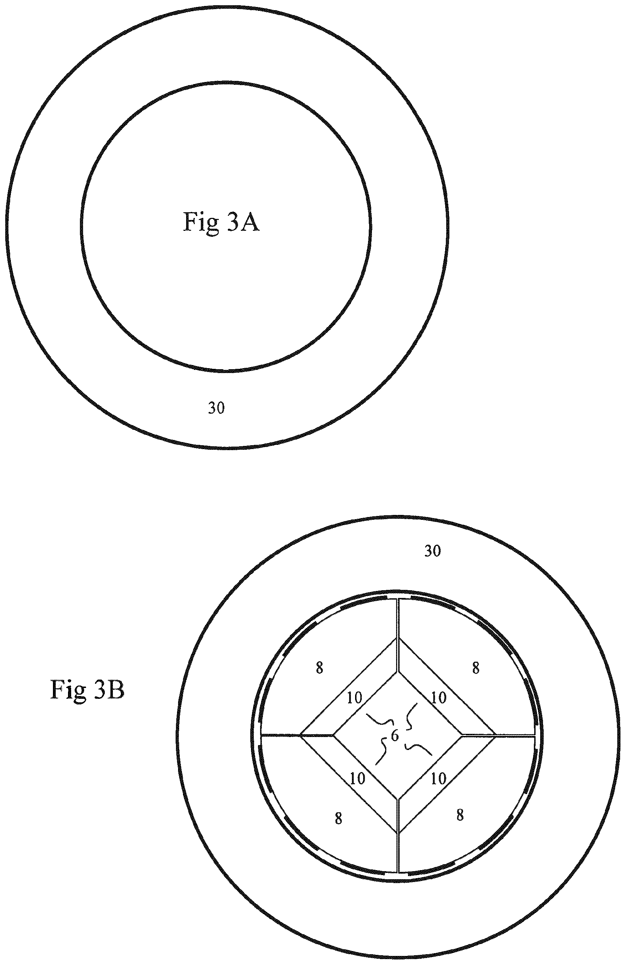

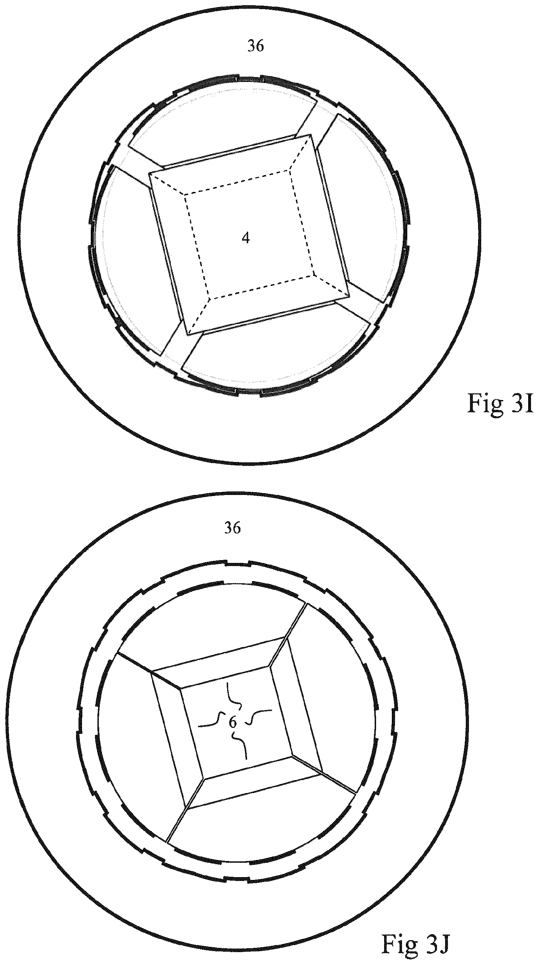

Die Figuren 3A bis 3F bzw. bis 3K stellen die Wirkungsweise des Rohr-Innenprägewerkzeugs 4 und damit zwei Ausführungen eines Prägevorgangs dar.

Die Figuren 3A bis 3F zeigen einen einfachen Prägevorgang mit dem erfindungsgemäßen Prägewerkzeug.

In Figur 3A ist das ungeprägte Rohr bzw. ein ungeprägter Ventilschaft 30 dargestellt, mit einem Innendurchmesser und einem Außendurchmesser.

In Figur 3B sind die Prägestempel 6 in das ungeprägte Rohr bzw. den ungeprägten Ventilschaft 30 eingeschoben. Die zusammengelegten Prägestempel 6 weisen mit der Strukturierung einen Außendurchmesser auf der kleiner als der Innendurchmesser des ungeprägten Rohrs bzw. des ungeprägten Ventilschafts 30 ist. Hier können alle Prägestempel 6 gleichzeitig in das ungeprägte Rohr bzw. den ungeprägten Ventilschaft 30 eingebracht werden.

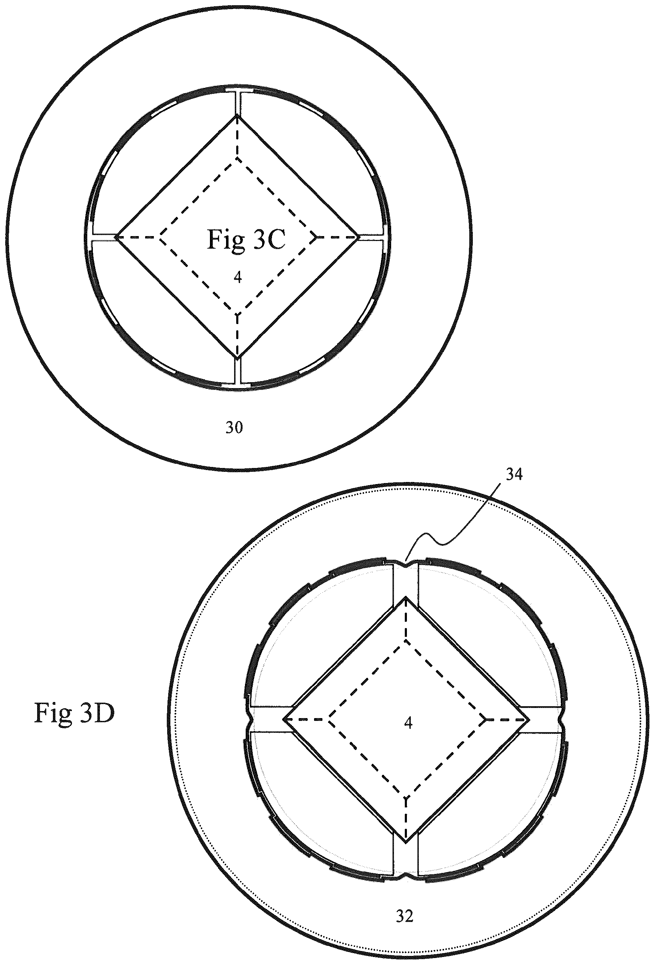

In Figur 3C ist der Keil 20 in die Prägestempel 6 eingebracht und bildet zusammen mit diesen das Prägewerkzeug 4. Die Prägestempel 6 sind leicht nach außen gefahren und liegen an einer Innenfläche des ungeprägten Rohrs bzw. des ungeprägten Ventilschafts 30 an.

In Figur 3D ist der Keil 20 vollständig zwischen die Prägestempel 6 vorgeschoben und die Prägestempel des Prägewerkzeugs 4 haben ihre Außenstruktur auf der Innenseite des nun geprägten Rohrs bzw. des geprägten Ventilschafts 32 eingeprägt. Durch die Prägebewegung bewegen sich die Flanken der Prägestempel 6 auseinander und so verbleiben ungeprägte Abschnitte in dem Rohr des geprägten Ventilschafts 32 als Prägeränder 34. Je nach Ausführung der gewünschten Prägung können diese Prägeränder einfach ignoriert werden, da auch sie zu einer Oberflächenvergrößerung der Innenfläche des geprägten Rohrs bzw. des geprägten Ventilschafts 32 beitragen.

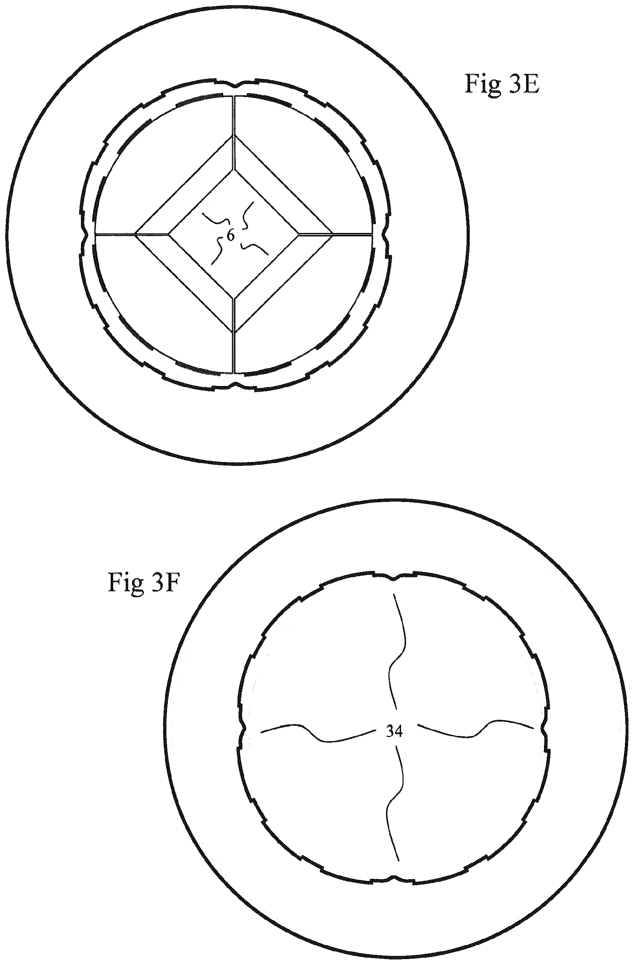

In Figur 3E ist der Keil wieder aus dem Prägewerkzeug 4 herausgezogen und nur die zurückgefahrenen Prägestempel 6 verbleiben im geprägten Rohr bzw. dem geprägten Ventilschaft 32. Die Prägestempel können ohne weiteres wieder zurückgefahren werden da sie lediglich in einer Radialrichtung vorgeschoben wurden. Die Struktur der Prägeflächen ist so ausgeführt, dass sich keine Hinterschneidungen bilden, wobei die Flanken der Strukturen auf der Mantelfläche immer in Bezug auf eine radiale Bewegungsrichtung hinterschneidungsfrei sind.

In Figur 3F sind die Prägestempel 6 ebenfalls aus dem Rohr bzw. dem geprägten Ventilschaft 32 herausgezogen. Gestrichelte Linien zeigen die Abmessungen des ungeprägten Rohr bzw. des ungeprägten Ventilschafts 33 im Vergleich zu dem geprägten Rohr bzw. dem geprägten Ventilschaft 32. Da in der vorliegenden Ausführung lediglich Kräfte von Innen nach außen wirken kann sich das Rohr bzw. der Ventilschaft in Radialrichtung ausdehnen was eine Durchmesservergrößerung sowohl des Innendurchmessers als auch des Außendurchmessers bewirkt bzw. bewirken kann. In Figur 3F sind die Prägeränder 34 deutlich zu erkennen. Sofern die Prägeränder für die Funktion des innenstrukturierten Rohrs 32 unerheblich sind, kann das Verfahren so beendet werden.

Ein innengekühltes Ventil kann hergestellt werden, indem ein entsprechender Ventilrohling an einer Innenseite des Schafts mit dem erfindungsgemäßen Verfahren hergestellt wird, oder indem ein mit dem vorliegenden Verfahren innenstrukturiertes Rohr als Ventilschaft mit einem Ventilkopf und einem Ventilschaftende verbunden wird, der Hohlraum des Ventils mit einem Kühlmittel wie Natrium gefüllt und dann verschlossen wird und das Ventil noch einer Endbearbeitung unterworfen wird.

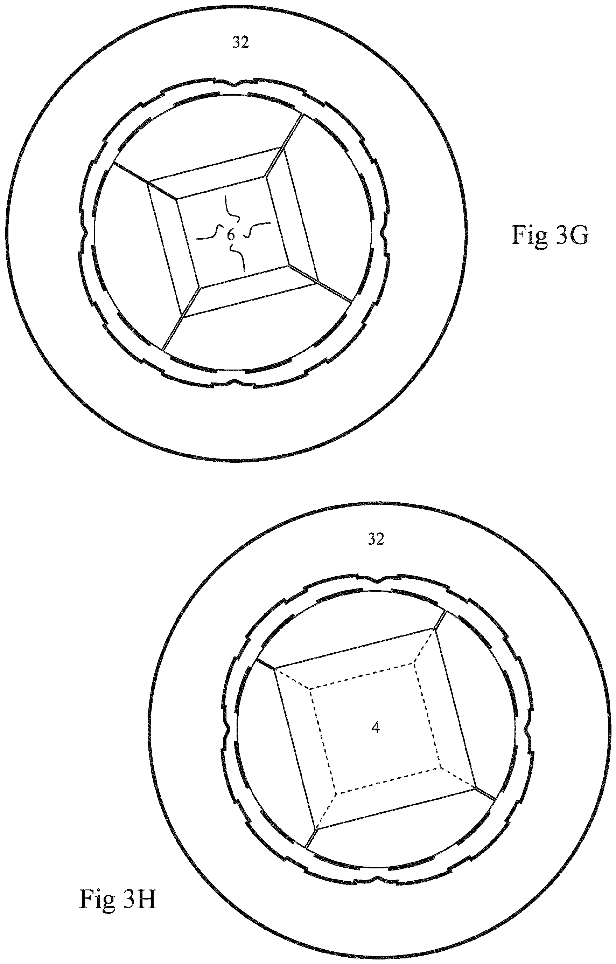

Figur 3G schließt an die Figur 3E an, und zeigt weitere Schritte eines Innenprägeverfahrens, bei dem die Prägeränder 34 vermieden werden können. In Figur 3G sind die zurückgefahrenen Prägestempel 6 gegenüber dem innengeprägten Rohr bzw. Ventilschaft 32 verdreht, bzw. in Umfangsrichtung versetzt. Es ist hier unerheblich ob die Prägestempel 6 oder das Prägewerkzeug 4 oder das innengeprägten Rohr bzw. der innengeprägte Ventilschaft 32 oder beide um eine Axialrichtung gedreht werden. Hier soll auf jeden Fall erreicht werden, dass die Prägeränder so gegenüber den Prägestempeln 6 versetzt sind, dass sie bei einem nächsten Prägevorgang nicht mehr zwischen den Prägestempeln 6 liegen.

In Figur 3H ist der Keil 20 wieder vollständig zwischen die Prägestempel 6 vorgeschoben und die Prägestempel des Prägewerkzeugs 4 haben ihre Außenstruktur auf der Innenseite des nun geprägten Rohrs bzw. des geprägten Ventilschafts 32 eingeprägt, und dabei die Prägeränder eingeebnet. Durch den zweiten Prägeschritt wurde eine gleichmäßige Prägestruktur an der Innenseite des fertiggeprägten Rohrs bzw. des fertiggeprägten Ventilschafts erreicht.

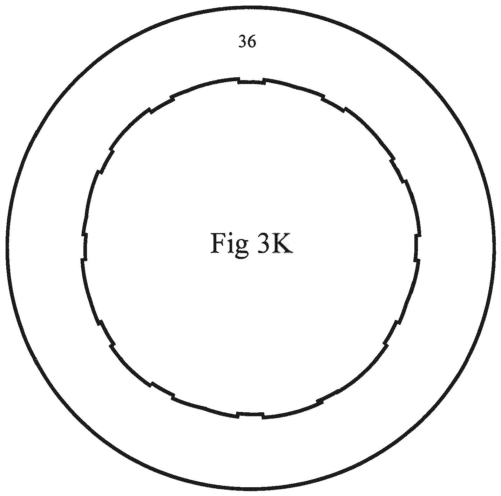

Die Figuren 3J und 3K entsprechen lediglich den Figuren 3E und 3F, wobei das fertiggeprägte Rohrs bzw. des fertiggeprägten Ventilschafts 36 mit einer gleichmäßigen inneren Struktur vorliegt.

Bevorzugt wird die Innenstruktur bzw. die Prägestruktur der Prägestempel so ausgewählt, dass sich nach einem Versetzen des Prägewerkzeugs bzw. der Prägestempel eine durchgehende Struktur innen an dem Rohr bzw. dem innen-fertiggeprägten Ventilschaft 36 zeigt.

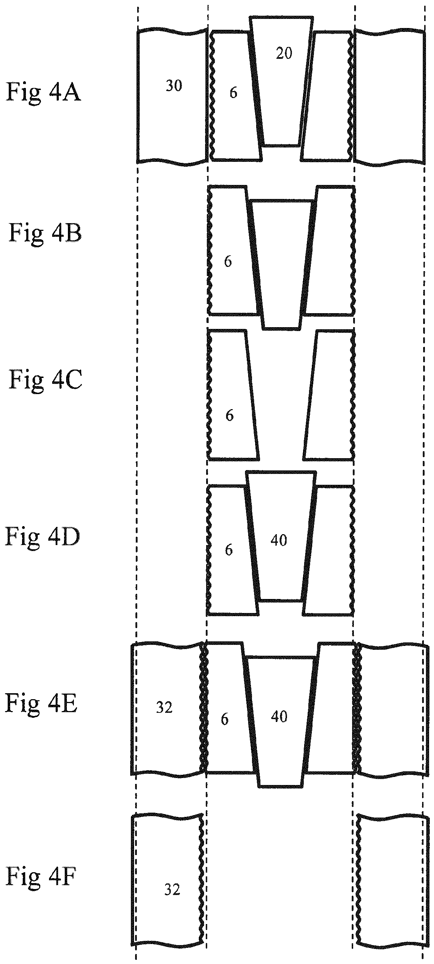

Figuren 4A bis 4F zeigen das Verfahren in einer abgewandelten Ausführung eines Prägevorgangs in einer Längs-Schnittansicht.

In Figur 4A ist das Prägewerkzeug mit den Prägestempeln 6 und dem Keil 20 bereits in das ungeprägte Rohr 30 eingeführt.

In Figur 4B ist der Keil 20 bis zu einer unteren Endstellung zwischen die Prägestempel 6 eingefahren, was jedoch nicht ausreicht, um die Prägung zu beenden, da der Vorschub der Prägestempel 6 in Radialrichtung nicht ausreicht.

In Figur 4C ist der Keil 20 vollständig aus dem Prägewerkzeug bzw. teilgeprägten und nicht dargestellten Rohr herausgefahren.

In Figur 4D ist ein zweiter, dickerer Keil 40 zwischen die Prägestempel 6 eingeführt, wobei das Rohr ebenfalls nicht dargestellt ist.

In Figur 4E ist der zweite dickere Keil 40 bis zu einer unteren Endstellung zwischen die Prägestempel 6 eingefahren, wodurch die Prägung fertiggestellt ist. Durch mehrere Keile kann auch bei einem begrenzten Hub des Keils eine nahezu beliebig tiefe Prägung innen in einem Rohr angebracht werden.

Die dargestellte kurze Form des Keils weist einige Nachteile auf, da zu Beginn und am Ende eines Prägevorgangs ein Kippmoment auf die Prägestempel wirkt was sich nachteilig auf die Prägung und den Verschleiß der Keilflächen auswirken kann.

Figur 4F stellt einen Längsschnitt durch ein fertiggeprägtes Rohr dar.

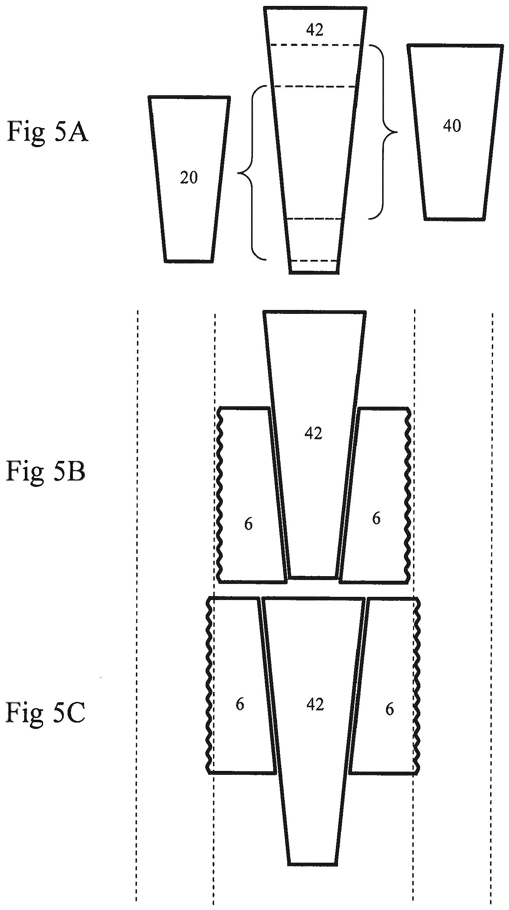

Figuren 5A bis 5C zeigen ein Prägeverfahren mit einem Langkeil 42 in einer Längs-Schnittansicht.

Figur 5A stellt einen Langkeil 42 dar, mit dem es möglich ist die Innenprägung der Figuren 4A bis 4F ohne einen Wechsel der Keile 20 und 40 vorzunehmen. Der Langkeil weist den gleichen Spitzenwinkel bzw. Pyramidenwinkel auf wie die beiden Keile 20 und 40 aus den Figuren 4A bis 4F. Der Keil ist durch seine größere Länge jedoch nicht dazu geeignet in einem Sackloch eingesetzt zu werden, da er eine deutlich größere Verschiebung in Axialrichtung benötigt. Der Langkeil 42 ist deutlich länger als eine reine Kombination der Keile 20 und 40 aus den Figuren 4A bis 4F.

In Figur 5B ist der Langkeil 42 zwischen die Prägestempel 6 eingefahren, sodass die Prägestempel in einer Innenseite eines gestrichelt dargestellten ungeprägten Rohrs 30 anliegen. Durch seine kleinere Spitze kann er bereits zu Beginn des Innenprägevorgangs die Prägestempel 6 auf ihrer gesamten Innen-Keilfläche stützen, sodass beim Prägen kein Kippmoment in dem Prägestempel 6 entstehen kann. Dies gestattet es die Prägestempel aus deutlich härterem Material zu fertigen da bei dieser Ausführung keine Biegespannungen in den Prägestempeln 6 entstehen können, sodass die Bruchgefahr im Vergleich zu den Verfahren der Figuren 4A bis 4F deutlich verringert ist.

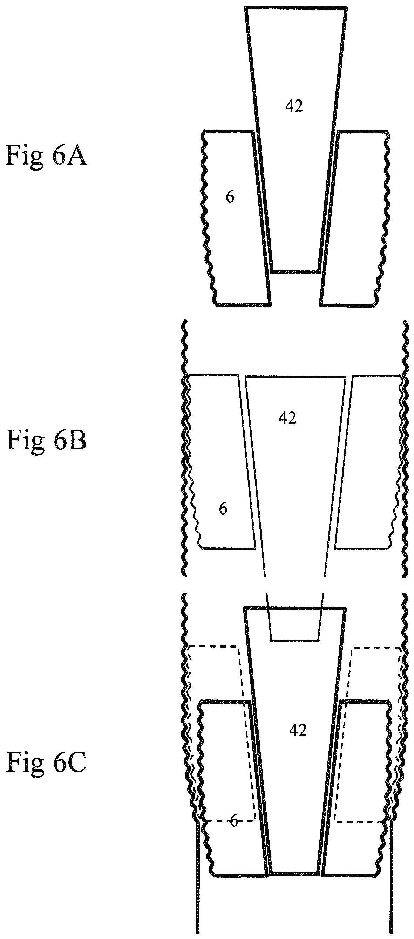

Figuren 6A bis 6C zeigen ein Schritt-Prägeverfahren mit einem Langkeil 42 bei dem ein relativ langes Rohr mit relativ kurzen Prägestempeln schrittweise in Längsrichtung innengeprägt werden kann.

In Figur 6A umfassen die Prägewerkzeuge 6 erfindungsgemäß einen konischen Teil an der Mantel- bzw. Prägefläche.

Figur 6B zeigt das Prägewerkzeug wie es nur teilweise an einer fertiggeprägten Fläche anliegt, wobei der konische Teil nicht mit der fertig geprägten Innenstruktur in Eingriff steht. Figur 6C zeigt das Prägewerkzeug, beim Prägen. Die gestrichelten Prägestempel zeigen die Endstellung der Prägewerkzeuge beim letzten vorangegangenen Innenprägeschritt. Nach einem Zurückfahren und wieder Vorfahren des Keils 42 können die Prägestempel 6 soweit nach vorne geschoben werden, bis das Prägemuster am konischen Teil der Prägestempel wieder mit der Prägung bzw. Teilprägung der Innenseite des Rohrs übereinstimmt, und beim weiteren Vorschub des Langkeils wird der konische Teil fertiggeprägt, und ein neuer Teil wird an- bzw. vorgeprägt. Durch die Struktur kann erreicht werden, dass sich die Prägestempel 6 selbständig an der bereits geprägten Innenfläche ausrichten. Das Verfahren kann ebenfalls mit einer Drehung des Rohrs oder des Prägewerkzeugs kombiniert werden um die entstehenden hier aber nicht gezeigten Prägeränder wie sie in den Figuren 3D bis 3F dargestellt sind zu vermeiden.

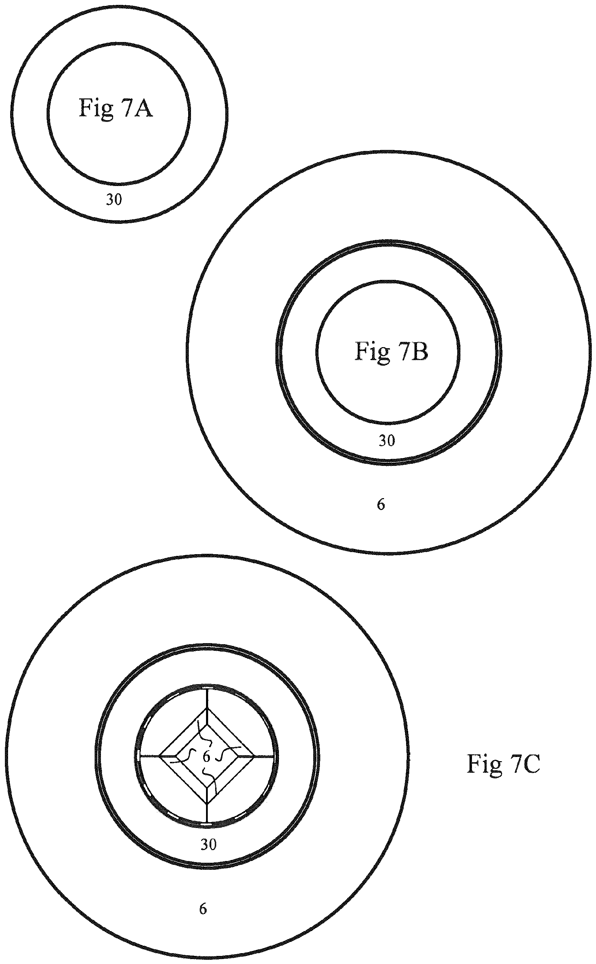

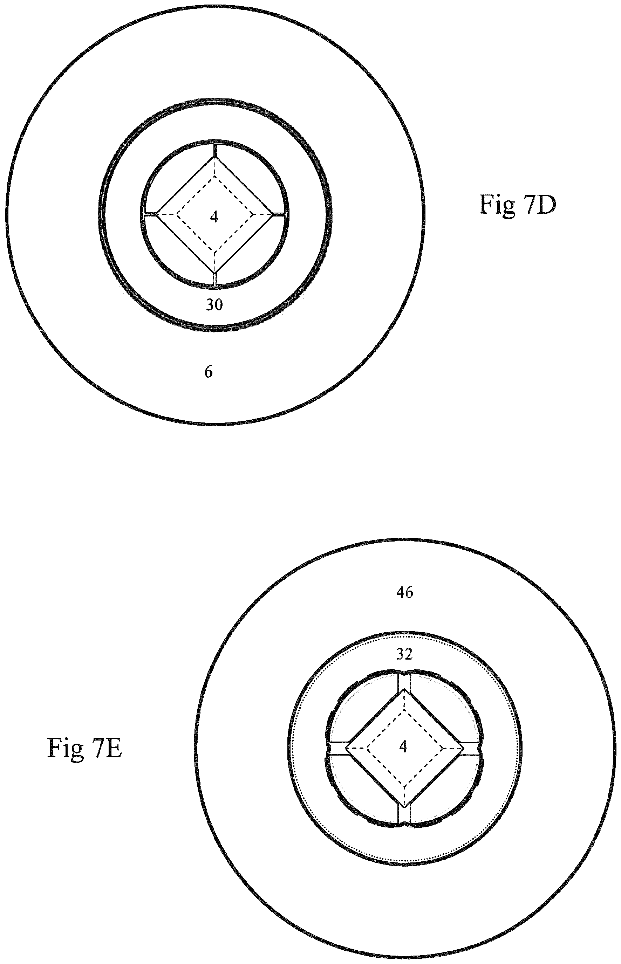

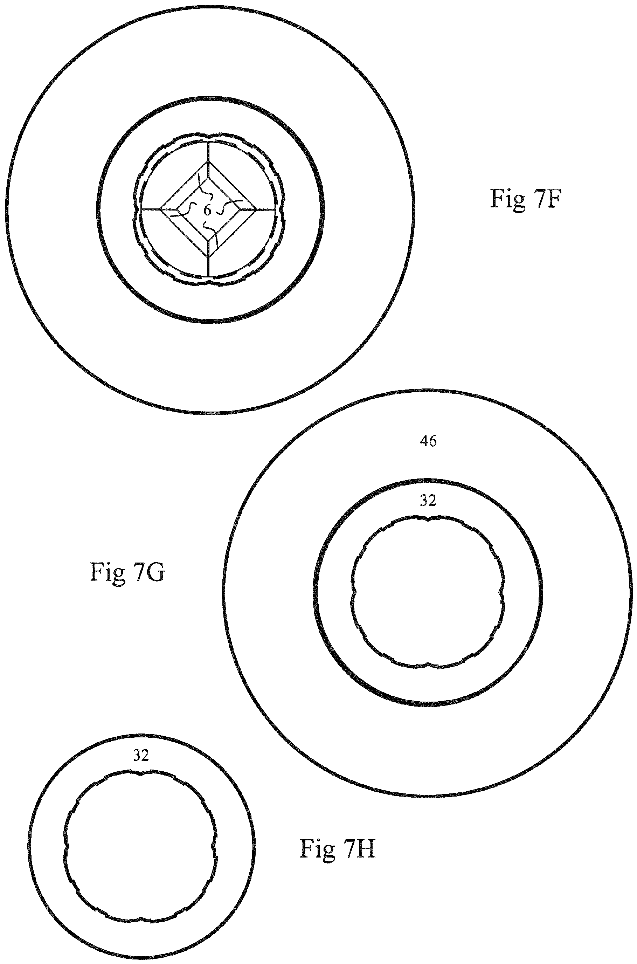

Die Figuren 7A bis 7H stellen ein weiteres Prägeverfahren mit einer Außenform dar.

In Figur 7A ist ein ungeprägtes Rohr bzw. ein ungeprägter Ventilschaft 30 dargestellt, wobei die Figur 7A der Figur 3A entspricht.

In Figur 7B ist das ungeprägte Rohr bzw. ein ungeprägter Ventilschaft 30 in eine Außenform 46 eingebracht, die eine deutlich größere Wandstärke als das Rohr bzw. der Ventilschaft 30 aufweist.

Die Figuren 7C bis 7F entsprechen im Wesentlichen den Figuren 3B bis 3E, und stellen den Prägevorgang durch die Prägestempel 6 dar die durch den Keil 20 eine Struktur auf die Innenfläche des Rohrs bzw. des Ventilschafts 30 einprägen. Im Gegensatz zu den Figuren 3B bis 3E kann sich das Rohr bzw. der Ventilschaft 30 nicht nach außen ausdehnen, da er sofort an der Innenfläche der Außenform 46 anliegt. Dies verringert die notwendige Vorschubdistanz des Keils 20 und auch die notwendige Radialbewegung der Prägestempel 6, da hier keine Vergrößerung des Rohrdurchmessers durch eine Streckung in Umfangsrichtung auftreten kann.

In Figur 7G ist das fertig geprägte Rohr bzw. der fertig geprägte Ventilschaft 32 in der Außenform 46 dargestellt.

In Figur 7H ist das fertig geprägte Rohr bzw. der fertig geprägte Ventilschaft 32 ohne die Außenform 46 dargestellt. Hier treten weniger Spannungen in dem Material des Rohrs bzw. des Ventilschafts 32 auf, da die Zugspannungen in Umfangsrichtungen vermieden werden können.

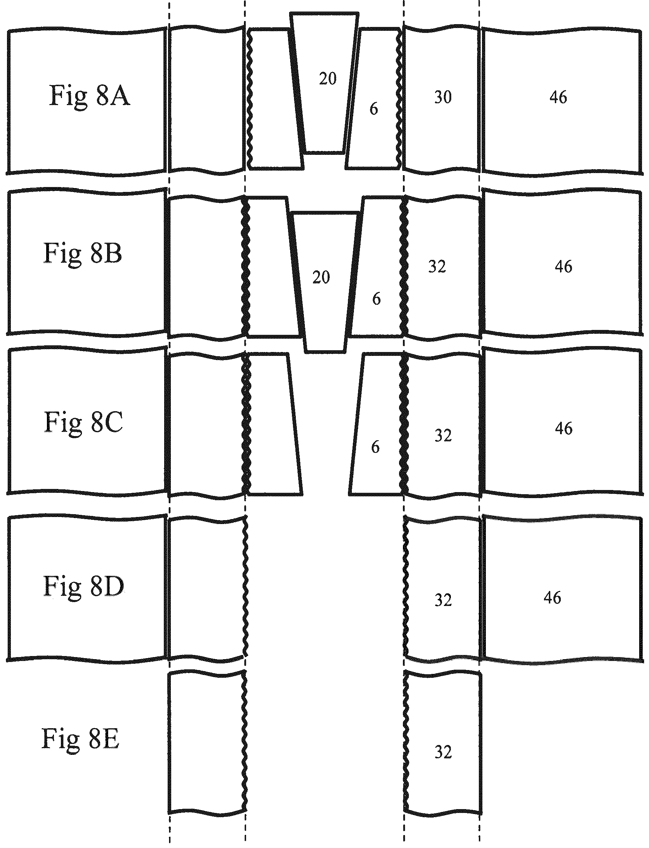

Die Figuren 8A bis 8E entsprechen einer Längs-Schnittansicht des Prägevorgangs wie er in den Figuren 7D bis 7H in einer Querschnittsansicht dargestellt ist. Dadurch, dass das Rohr nicht nach außen ausweichen kann, ist es möglich die Prägevorgang hier mit einem relativ kurzen Keil auszuführen, da hier eine geringere Bewegung der Prägestempel 6 in Radialrichtung erforderlich ist, um vergleichbar hohe Prägedrücke zu erhalten.

In den Figuren 8A bis 8E wurde eine Innenprägung durch Kräfte erreicht die von Innen durch sich bewegende Prägestempel auf eine Innenfläche eines Rohrs oder Ventilschafts ausgeübt wurden. Dies erfordert jedoch ein Prägewerkzeug das es den Prägestempeln ermöglicht sich in radialer Richtung zu bewegen. Dies bringt jedoch Stabilitätsprobleme und bedingt zwangsläufig relativ große Prägeränder.

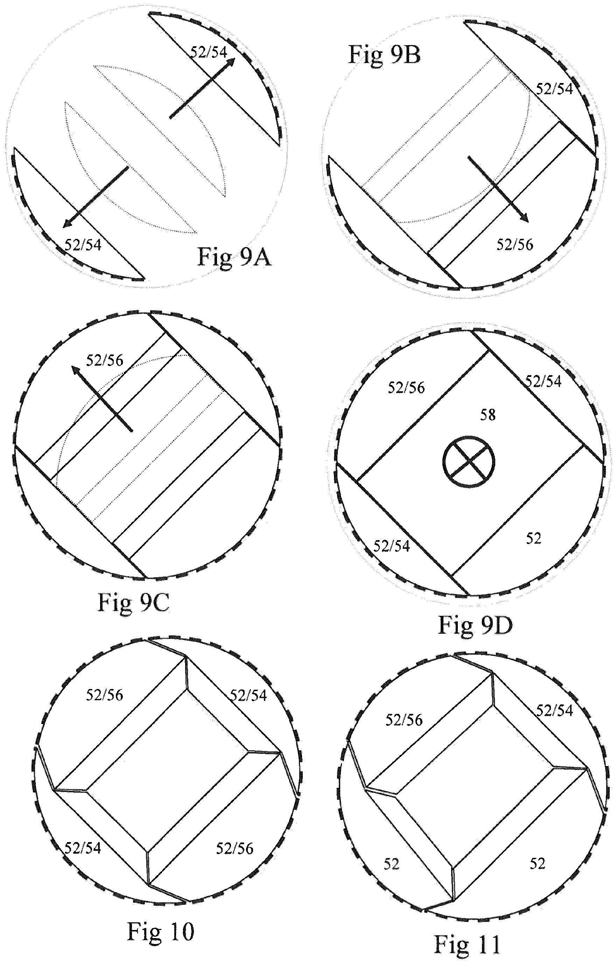

Die Figuren 9A bis 9D zeigen einen Prägezylinder und ein mögliches Zusammensetzen des Prägezylinders aus Prägeteilen in einem Rohr. Im Gegensatz zu dem Prägewerkzeug ist der Prägezylinder im Wesentlichen unbeweglich, kann jedoch zusammengesetzt und zerlegt werden, indem die Prägeteile von oder in einer Endposition nur in einer Radialrichtung bewegt werden müssen. Das heißt der Prägezylinder kann wie ein Kern bei einem Kokillengussverfahren aus der Form entnommen werden, ohne mit entsprechenden Teilen eines Gussstücks zu kollidieren. Im Gegensatz zu einem Gussverfahren wird hier der Prägezylinder in einem Umform- bzw. Schmiedeverfahren eingesetzt. Dies stellt bedeutend größere Anforderungen an das Material des Prägezylinders. Bevorzugt weist der zusammengesetzte Prägezylinder keine Hohlräume auf.

In Figur 9A werden zwei Prägeteile 52 als erste Prägeteile 54 eines Prägezylinders in ein Rohr eingesetzt, dessen Innenfläche durch eine gestrichelte Linie dargestellt ist. Die letzte Bewegung betrifft dabei eine Bewegung in Radialrichtung, wie es durch die Pfeile dargestellt ist.

In Figur 9B wird ein weiteres Prägeteil 52 in Axialrichtung zwischen die bereits eingefügten Prägeteile eingeschoben und ebenfalls mit einer Bewegung in Radialrichtung in seine Endposition gebracht.

In Figur 9C wird ein letztes Prägeteil 52 als Präge-Schlussteil 54 in Axialrichtung zwischen die bereits eingefügten Prägeteile eingeschoben und ebenfalls mit einer Bewegung in Radialrichtung in seine Endposition gebracht. Mit dem Präge-Schlussteil 54 ist die gesamte Mantelfläche des Prägezylinders fertiggestellt. In Figur 9C verbleit nur ein keilförmiger Hohlraum zwischen den Prägeteilen.

In Figur 9D ist der Hohlraum mit einem keilförmigen Stützelement 58 aufgefüllt, sodass keine Hohlräume verbleiben. Der fertige Prägezylinder ist im Wesentlichen massiv aufgebaut und kann daher hohe Drücke aufnehmen die gleichmäßig von außen auf den Prägezylinder wirken. Da Prägezylinder kann sich nicht ausdehnen.

Die Figuren 10 und 11 zeigen andere mögliche Konfigurationen von Prägeteilen die einen Prägezylinder bilden können.

Die Figur 10 zeigt ebenfalls einen Prägezylinder, dessen Elemente in mindestens einer Richtung keilförmig ausgeführt sind. Der nicht dargestellte Stützkörper ist keil- bzw. meißelförmig, und kann in Axialrichtung leicht herausgezogen werden, auch wenn der Prägezylinder von außen radial belastet ist. Die Präge-Schlussteile 56 können ebenfalls auch bei radialer Belastung radial nach innen bewegt und in Axialrichtung herausgezogen werden, nachdem der Stützkörper entfernt wurde. Danach können die ersten Prägeteile 54 in Radialrichtung bewegt und in Axialrichtung aus dem Rohr entnommen werden.

Bei dem Prägezylinder von Figur 11 ist nur eines der Prägeteile 52 ein Präge-Schlussteil 56 und auch nur ein erstes Prägeteil 54 vorhanden. Der Prägezylinder kann nur in einer Reihenfolge zusammengesetzt werden, beginnend mit dem ersten Prägeteil 52, dem Prägeteil rechts unten, gefolgt von dem Prägeteil links unten und schließlich gefolgt von den Prägeschluss-Teil 56. Durch ein Einsetzen des Stützkörpers wird der Prägezylinder gegenüber radialen Belastungen druckfest. Der Prägezylinder kann in umgekehrter Reihenfolge zerlegt werden, wobei alle Prägeteile aus ihrer Endposition zuerst in einer Radialrichtung bewegt werden können, und dabei entlastet werden. Alle Teile verkeilen sich gegenseitig, und können sich beim Zerlegen gegenseitig entlasten, sodass der Prägezylinder auch unter einer gleichmäßigen radialen Belastung zerlegt werden kann.

Noch besser wäre dies bei einem Prägezylinder mit 5 oder mehr Prägeteilen möglich.

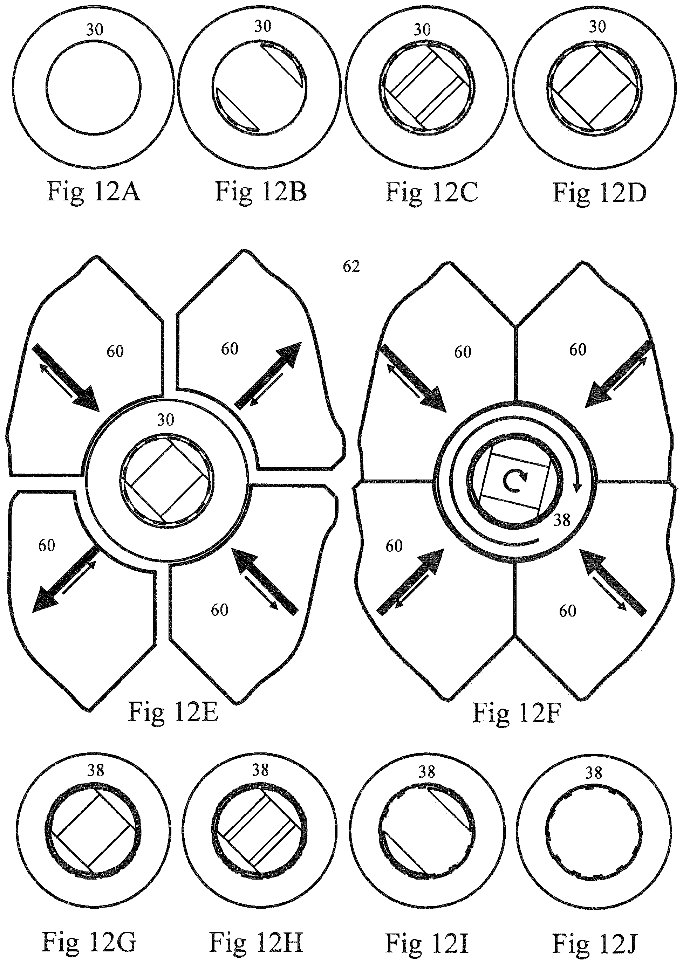

Die Figuren 12A bis 12J stellen eine erste Möglichkeit eines Innenprägeverfahrens mit einem Prägezylinder dar. In der Figur 12A ist ein innen zu prägendes Rohr oder ein innen zu prägender Ventilschaft 30 dargestellt. In den Figuren 12B bis 12D wird der Prägezylinder analog zu den Schritten in den Figuren 9A bis 9D in dem Rohr zusammengesetzt.

Die Figuren 12E und 12F zeigen den eigentlichen Prägevorgang. In der Figur 12E schlagen Hämmer außen auf die Außenfläche des Rohrs 30 um dieses zu verjüngen, wobei sich nach und nach auch der Innendurchmesser des Rohrs verringert. Durch die Verjüngung des Rohrs kommt die Innenfläche des Rohrs irgendwann mit den Prägestrukturen außen auf dem Prägeteilen des Prägezylinders in Kontakt. Bei einer weiteren Einwirkung der Hämmer wird die Innenfläche in die Prägestruktur des Prägezylinders gepresst und die Struktur des Prägezylinders wird auf der Innenseite des Rohrs eingeprägt. Je nach Betriebsart der Hämmer kann sich ein Rundkneten (Figur 12E) oder ein Kalthämmern (Figur 12F) besser bewähren.

Nachdem das Rohr fertiggehämmert ist und die Struktur auf der Innenseite des nun fertig geprägten und verjüngten Rohrs bzw. des fertiggeprägten und verjüngten Ventilschafts ausgebildet bzw. ausgeprägt hat, kann der Prägezylinder wie in den Figuren 12G bis 12 J gezeigt in dem Rohr zerlegt und Prägeteil für Prägeteil aus dem Rohr herausgezogen werden. Es ist ebenfalls möglich den Zylinder radial oder in Axialrichtung versetzt wieder zusammenzusetzen und so einen nächsten Abschnitt eines langen Rohrs oder eines langen Ventilschafts schrittweise zu prägen.

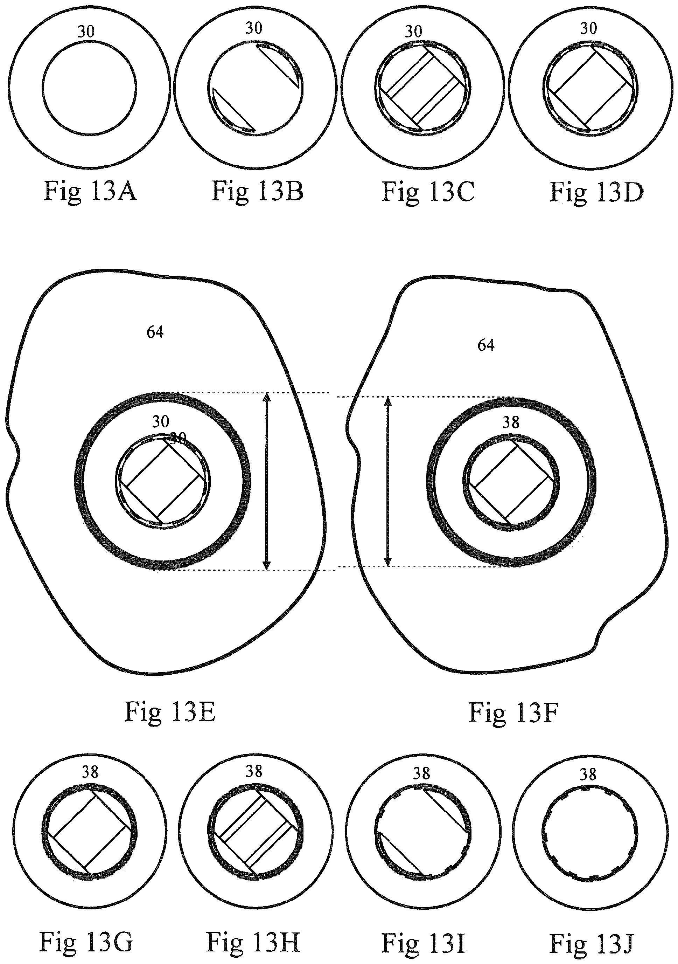

Die Figuren 13A bis 13D und 13G bis 13J entsprechen den Figuren 12A bis 12D und 12G bis 12J. Anstelle eines Hämmerverfahrens wird hier ein Zieh-Druckverfahren das bei der Ventilherstellung auch "Neckingverfahren" bezeichnet wird verwendet, um das Rohr zu verjüngen und dabei eine Struktur auf einer Innenseite des Rohrs einzuprägen.

Das Verfahren nach den Figuren 12 bzw. 13A bis J kann auch durch die Verwendung eines anderen Kerns abgewandelt werden. Ein weiterer Vorteil ergibt sich wenn das Bauteil wie im Falle von Ventilschäften in weiteren Schritten weiter verjüngt wird. Hier kann eine relativ hohe und dafür schmale Struktur in einem relativ frühen Verjüngungsschritt innen in dem Rohr eingeprägt werden. In nachfolgenden Verjüngungsschritten findet dann im Wesentlichen eine Nachverdichtung der Struktur in Umfangsrichtung und eventuell eine Streckung der Struktur in Axialrichtung statt. Wenn diese weitere Verformung bei der Auslegung der Prägestruktur berücksichtigt wird kann an einem fertigen Rohr oder einem fertigen Ventilschaft eine viel kleinere Struktur erreicht werden, wie nur mit den vorstehend beschriebenen Verfahren möglich wäre. Es werden hier Kegel oder Pyramidenstrukturen vorgeschlagen die in Axialrichtung schmaler und in Umfangsrichtung breiter sind als die Strukturen, die in dem fertigen Rohr oder dem fertigen Ventilschaft gewünscht sind. Ein Verfahren zum Herstellen eines entsprechenden Rohrs oder innengekühlten Ventils würde dann ein Innenprägen eines beispielsweise aus einem Napf geformten Ventilrohlings gefolgt von weiteren Verjüngungsschritten wie Querrundwalzen umfassen, um den Rohschaft weiter zu verlängern und zu verjüngen. Nachdem die Endabmessungen erreicht sind kann das Ventil mit einem Kühlmittel gefüllt und durch Reibschweißen mit einem weiteren Schaftstück oder einem Schaftendstück verschlossen werden. Nach den üblichen Endbearbeitungsschnitten kann ein Ventil das größtenteils umgeformt wurde mit nur geringem Materialabfall hergestellt werden.

Zusammengehörige Keil-Innenflächen und Keil-Innenflächen sollen parallel liegen bzw. verlaufen, und auch einen gleichen Winkel zu einer Axialrichtung des Prägewerkzeugs aufweisen.

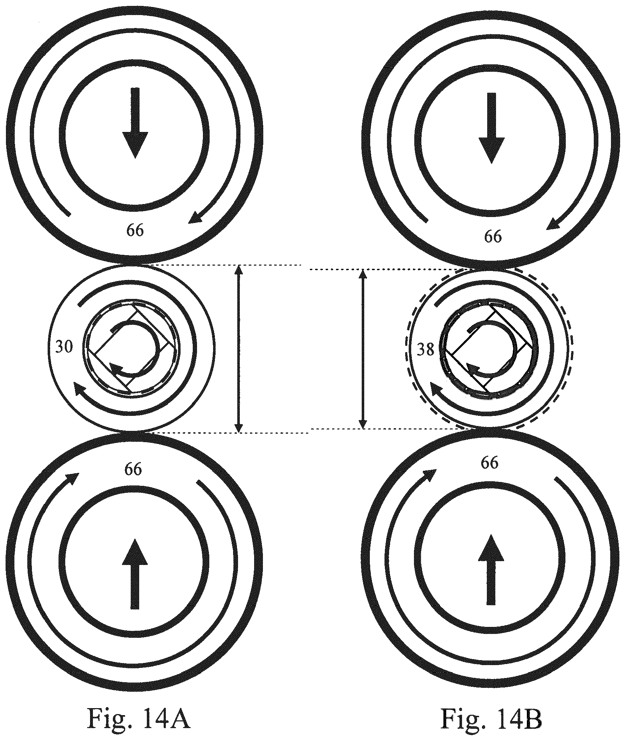

Die Figuren 14A und 14B entspechen den Schritten der Figuren12E bzw. 13E sowie 12F und 13F, in dem sie ein Verjüngungsverfahren darstellen, bei dem ein Außenqeurschnitt eines Rohrs oder Ventilschafts verkleinert wird und gleichzeitig eine Innenfläche gegen eine Prägefläche eines in dem Schaft befindlichen Kerns gepresst wird. Hier wird der Schaft zwischen mindestens zwei Walzen zusammengepresst, wobei die Achsen der Walzen und des Werkstücks sich jeweils parallel erstrecken. Damit entsprechen die Figuren 14A und 14B einem Rundquerwalzverfahren. Die Figuren 14A und 14B können jedoch auch als ein Drückwalzverfahren interpretiert werden, wobei jeweils nur ein kleiner axialer Abschnitt des Schaftes durch mindestens eine Drückwalze umgeformt wird. Diese Ausführung weist gegenüber dem Rundquerwalzen den Vorteil auf, dass sich der Schaft während des Verjüngens in Axialrichtung verlängern kann, da eine Bewegung in Axialrichtung nicht durch die Struktur des Kerns behindert wird. Diese Ausführung ist besonders für Ventile geeignet deren Kopf und Schaft aus einem Teil durch Umformen aus einem napfförmigem Vorformling hergestellt wurden, da hierbei sowieso mehrere Arbeitsschritte anfallen, bei denen der Schaft oder ein Schaftabschnitt eines Hohlventils verjüngt wird.

### Bezugszeichenliste

- 4: Prägewerkzeug,
- 6: Prägestempel
- 8: Prägestempel-Stirnseite
- 10: Innen-Keilfläche / Keil-Innenfläche
- 14: Flankenflächen.
- 16: Prägefläche / Stempelfläche / Mantelfläche
- 18: Strukturierung
- 20: Keil
- 22: Keilaußenfläche
- 24: Keil Stirnfläche
- 26: Ursprünglicher Außendurchmesser des Prägewerkzeugs
- 30: Rohr / Ventilschaft ungeprägt
- 32: Rohr / Ventilschaft geprägt / Vorgeprägt
- 34: Prägerand
- 36: fertiggeprägtes Rohr
- 38: fertiggeprägtes, und verjüngtes Rohr
- 40: zweiter Keil
- 42: Langkeil
- 44: teil-konischer Prägestempel
- 46: Außenform
- 50: Prägezylinder
- 52: Prägeteil
- 54: erstes Prägeteil
- 56: Präge-Schlussteil
- 58: Stützelement
- 60: Hammer
- 62: Hämmerwerk
- 64: Matrize
- 66: Drückwalzen

## Patentansprüche

1. Prägewerkzeug (4) zum Einprägen einer Struktur in einer Innenseite eines Rohrs, umfassend mindestens drei Prägestempel (6) und einen Keil (20), wobei jeder der mindestens drei Prägestempel (6) aufweist:
- eine in Radialrichtung außenliegende Stempel- oder Prägefläche (16), die eine Strukturierung (18) aufweist, die einer Negativform der einzuprägenden Struktur entspricht, wobei die Stempelfläche (16) um eine Gerade gekrümmt ist, die parallel zu der Mittenachse ist,
- zwei Flankenflächen (14), die in einem Winkel zueinander stehen und wobei deren Schnittlinie parallel zu der Mittenachse ist, **dadurch gekennzeichnet, dass**:
- jeder der mindestens drei Prägestempel (6) eine Keil-Innenfläche (10) aufweist, welche zu der Mittenachse geneigt ist und die zwei Flankenflächen (14) jeweils in einem gleichen Winkel schneidet,
- der Keil (20) mindestens drei Keil-Außenflächen (22) aufweist, die jeweils den gleichen Winkel zu der Mittenachse aufweisen und wobei jede der Keil-Außenflächen (22) zu jeder ihrer benachbarten Keil-Außenflächen (22) in einem gleichen Winkel steht,
- das Prägewerkzeug (4) eine teilweise konische Stempel- oder Prägefläche (16) aufweist.

2. Prägewerkzeug (4) nach Anspruch 1, wobei die Stempelfläche (16) um die Mittenachse gekrümmt ist, und die Flankenflächen (14) Ebenen bilden, deren Schnittlinie mit der Mittenachse zusammenfällt.

3. Prägewerkzeug (4) nach Anspruch 1, wobei die Stempelfläche (16) um eine Achse gekrümmt ist, die hinter der Mittenachse liegt.

4. Prägewerkzeug (4) nach einem der Ansprüche 1 bis 3, wobei die Stempelfläche (16) um eine Achse gekrümmt ist, wobei die Winkel jeweils zweier Flankenflächen (14) eines Prägestempel (6) 360° geteilt durch die Anzahl der Prägestempel (6) in dem Prägewerkzeug (4) entspricht, und wobei bevorzugt die Schnittlinien zweiter benachbarter Keil-Außenflächen (22) mit einer Ebene, die senkrecht zu der Mittenachse steht 180° multipliziert mit dem Quotienten aus der Anzahl der Prägestempel (6) minus 2, geteilt durch die Anzahl der Prägestempel (6) entspricht.

5. Prägewerkzeug (4) nach einem der Ansprüche 1, 2, 3 oder 4, wobei die Strukturierung (18) eine Variation des Radius entlang der Längsrichtung und jeder Helixrichtung umfasst.

6. Prägewerkzeug (4) nach einem der Ansprüche 1 bis 5, weiter umfassend eine hohle Außenform, die dazu bestimmt ist, das innen zu prägende Rohr beim Prägevorgang aufzunehmen, wobei die Außenform als Widerlager dient und verhindert, dass sich das Rohr lediglich weitet, anstatt die Struktur an der Innenseite einzuprägen.

7. Prägemaschine, umfassend das Prägewerkzeug (4) nach einem der Ansprüche 1 bis 6, umfassend mindestens eine Vorschubeinrichtung, um den Keil (20) gegenüber dem Prägeteilen vorzuschieben, wobei weiter eine Einrichtung vorgesehen sein kann, die eine Bewegung der Prägestempel (6) und/oder des Rohrs und/oder der Außenform verhindert.

8. Verfahren zum Prägen einer Innenseite eines Rohrs, umfassend:
- Einbringen mindestens dreier Prägestempel (6) die jeweils an einer Außenfläche eine Struktur aufweisen, in ein Rohr, wobei die Prägestempel (6) im Wesentlichen an Flankenflächen (14) aneinander liegen, und wobei zwischen Innenseiten der Prägestempel (6) ein Hohlraum verbleibt, Einführen eines Keils (20) in den Hohlraum zwischen die Innenseiten der Prägestempel (6), und Auseinanderpressen der Prägestempel (6) durch eine Bewegung des Keils (20) in eine Axialrichtung, wobei die Struktur der Außenfläche der Prägestempel (6) in die Innenseite des Rohrs eingeprägt wird, weiter umfassend:
Herausfahren des Keils (20) zwischen den Innenseiten der Prägestempel (6), Versetzen der Prägestempel (6) in Axialrichtung Einbringen des Keils (20) zwischen die Innenseiten der versetzten Prägestempel (6), und
Auseinanderpressen der Prägestempel (6) durch eine Bewegung des Keils (20) in eine Axialrichtung, wobei die Struktur der Außenfläche der Prägestempel (6) in die Innenseite des Rohrs eingeprägt wird.

9. Verfahren nach Anspruch 8, wobei die Prägestempel (6) Teil eines Prägewerkzeugs (4) nach einem der Ansprüche 1 bis 6 sind.

10. Verfahren zum Prägen einer Innenseite seines Rohrs nach Anspruch 9, wobei nach einem Zurückfahren des Keils (20) die Prägestempel 6 soweit nach vorne geschoben werden, bis das Prägemuster am konischen Teil der Prägestempel wieder mit der Prägung bzw. Teilprägung der Innenseite des Rohrs übereinstimmt, und wobei beim weiteren Vorschub des Keils (20) der konische Teil fertiggeprägt, und ein neuer Teil an- bzw. vorgeprägt wird.

## Claims

1. An embossing tool (4) for embossing a structure in an inner side of a pipe, comprising at least three embossing stamps (6) and a wedge (20), wherein each of the at least three embossing stamps (6) has:
a stamp or embossing surface (16) lying on the outside in the radial direction, which has a structuring (18), which corresponds to a negative form of the structure to be embossed, wherein the stamp surface (16) is curved about a straight line, which is parallel to the center axis,
two flank surfaces (14), which are at an angle to one another and wherein the intersection line thereof is parallel to the center axis,
**characterized in that**:
each of the at least three embossing stamps (6) has a wedge inner surface (10), which is inclined relative the center axis and in each case intersects the two flank surfaces (14) at an identical angle,
the wedge (20) has at least three wedge outer surfaces (22), which each have the same angle to the center axis and wherein each of the wedge outer surface (22) stands at an identical angle to each of its adjacent wedge outer surfaces (22),
the embossing tool (4) has a partially conical stamp or embossing surface (16).

2. The embossing tool (4) according to claim 1, wherein the stamp surface (16) is curved about the center axis, and the flank surfaces (14) form planes, the intersection line of which coincides with the center axis.

3. The embossing tool (4) according to claim 1, wherein the stamp surface (16) is curved about an axis, which lies behind the center axis.

4. The embossing tool (4) according to one of claims 1 to 3, wherein the stamp surface (16) is curved about an axis, wherein the angles of two respective flank surfaces (14) of an embossing stamp (6) corresponds to 360° divided by the number of the embossing stamps (6) in the embossing tool (4), and wherein the intersection lines of second adjacent wedge outer surfaces (22) with a plane, which is perpendicular to the center axis, corresponds to 180°, multiplied by the quotient of the number of the embossing stamps (6), minus 2, divided by the number of the embossing stamps (6).

5. The embossing tool (4) according to one of claim 1, 2, 3, or 4, wherein the structuring (18) comprises a variation of the radius along the longitudinal direction and each helix direction.

6. The embossing tool (4) according to one of claims 1 to 5, further comprising a hollow outer form, which is intended to receive the pipe, which is to be embossed on the inside, during the embossing process, wherein the outer form serves as abutment and prevents that the pipe only widens instead of embossing the structure on the inner side.

7. An embossing machine, comprising the embossing tool (4) according to one of claims 1 to 6, comprising at least one feed device in order to advance the wedge (20) with respect to the embossing parts, wherein a device can further be provided, which prevents a movement of the embossing stamp (6) and/or of the pipe and/or of the outer form.

8. A method for embossing an inner side of a pipe, comprising:
- introducing at least three embossing stamps (6), which each have a structure on an outer surface, into a pipe, wherein the embossing stamps (6) essentially adjoin one another on flank surfaces (14), and wherein a hollow space remains between inner sides of the embossing stamps (6), inserting a wedge (20) into the hollow space between the inner sides of the embossing stamps (6), and pressing apart the embossing stamps (6) by means of a movement of the wedge (20) in an axial direction, wherein the structure of the outer surface of the embossing stamps (6) is embossed into the inner side of the pipe, further comprising:
extending the wedge (20) between the inner sides of the embossing stamps (6),
shifting the embossing stamps (6) in the axial direction
introducing the wedge (20) between the inner sides of the shifted embossing stamps (6), and
pressing apart the embossing stamps (6) by means of a movement of the wedge (20) in an axial direction, wherein the structure of the outer surface of the embossing stamps (6) is embossed into the inner side of the pipe.

9. The method according to claim 8, wherein the embossing stamps (6) are part of an embossing tool (4) according to one of claims 1 to 6.

10. The method for embossing an inner side of a pipe according to claim 9, wherein, after a retraction of the wedge (20), the embossing stamps 6 are pushed forward until the embossing pattern on the conical part of the embossing stamps corresponds to the embossment or partial embossment, respectively, of the inner side of the pipe again, and wherein the conical part is finish-embossed during the further advancement of the wedge (20), and a new part is slightly embossed or pre-embossed, respectively.

## Revendications

1. Outil d'estampage (4) pour estamper une structure dans une face interne d'un tuyau, comprenant au moins trois poinçons d'estampage (6) et un coin (20) ;
dans lequel chacun des au moins trois poinçons d'estampage (6) présente :
une surface d'estampage ou de gaufrage (16) tournée vers l'extérieur dans la direction radiale, qui présente une structuration (18), qui correspond à une forme négative de la structure à estamper, dans lequel la surface d'estampage (16) est incurvée autour d'une ligne droite, qui est parallèle à l'axe médian,
deux surfaces de flanc (14), qui définissent un angle l'une par rapport à l'autre et dans lequel leur ligne de coupe est parallèle à l'axe médian,
**caractérisé en ce que**
chacun des au moins trois poinçons d'estampage (6) présente une face interne de coin (10), qui est inclinée par rapport à l'axe médian et coupe les deux surfaces de flanc (14) respectivement à un angle identique,
le coin (20) présente au moins trois surfaces externes de coin (22), qui présentent respectivement le même angle par rapport à l'axe médian et dans lequel chacune des surfaces externes de coin (22) se trouve à un angle identique par rapport à chacune de ses surfaces externes de coin adjacentes (22),
l'outil d'estampage (4) présente une surface d'estampage ou de gaufrage (16) partiellement conique.

2. Outil d'estampage (4) selon la revendication 1, dans lequel la surface d'estampage (16) est incurvée autour de l'axe médian, et les surfaces de flanc (14) forment des plans, dont la ligne de coupe coïncide avec l'axe médian.

3. Outil d'estampage (4) selon la revendication 1, dans lequel la surface d'estampage (16) est incurvée autour d'un axe, qui se situe derrière l'axe médian.

4. Outil d'estampage (4) selon une des revendications 1 à 3, dans lequel la surface de gaufrage (16) est incurvée autour d'un axe, dans lequel l'angle correspond respectivement à deux surfaces de flanc (14) d'un poinçon d'estampage (6) divisées à 360° par la pluralité de poinçons d'estampage (6) dans l'outil d'estampage (4) et dans lequel de préférence les lignes de coupe de deux surfaces externes de coin adjacentes (22) correspondent à un pan, qui est perpendiculaire à l'axe médian à 180° multiplié par les quotients de la pluralité de poinçons d'estampage (6) moins 2, divisé par la pluralité de poinçons d'estampage (6).

5. Outil d'estampage (4) selon une des revendications 1, 2, 3 ou 4, dans lequel la structuration (18) comprend une variation du rayon le long de la direction longitudinale et de sa direction hélicoïdale.

6. Outil d'estampage (4) selon une des revendications 1 à 5, comprenant en outre un moule externe creux, qui est conçu pour renfermer le tuyau à estamper à l'intérieur lors du processus d'estampage, dans lequel le moule externe sert de butée et empêche que le tuyau s'élargisse uniquement, au lieu d'estamper la structure sur la face interne.

7. Machine d'estampage, comprenant l'outil d'estampage (4) selon une des revendications 1 à 6, comprenant en outre au moins un dispositif d'avancée, pour avancer le coin (20) par rapport aux pièces d'estampage, dans lequel en outre un dispositif peut être prévu, qui empêche un mouvement du poinçon d'estampage (6) et/ou du tuyau et/ou du moule externe.

8. Procédé d'estampage pour estamper une face interne d'un tuyau, comprenant de :
- introduire au moins trois poinçons d'estampage (6) qui présentent respectivement une structure sur une surface externe, dans un tuyau, dans lequel les poinçons d'estampage (6) viennent reposer essentiellement sur les surfaces de flanc (14) et dans lequel entre les faces internes des poinçons d'estampage (6) un espace creux subsiste, insérer un coin (20) dans l'espace creux entre les faces internes des poinçons d'estampage (6) et presser les poinçons d'estampage (6) par un mouvement du coin (20) dans une direction axiale, dans lequel la structure des surfaces externes des poinçons d'estampage (6) est estampée dans la face interne du tuyau, comprenant en outre de :
retirer le coin (20) entre les faces internes des poinçons d'estampage (6),
décaler les poinçons d'estampage (6) dans la direction axiale,
introduire le coin (20) entre les faces internes des poinçons d'estampage décalés (6), et
presser les poinçons d'estampage (6) par un mouvement du coin (20) dans une direction axiale, dans lequel la structure des surfaces externes des poinçons d'estampage (6) est estampée dans la face interne du tuyau.

9. Procédé selon la revendication 8, dans lequel les poinçons d'estampage (6) font partie d'un outil d'estampage (4) selon une des revendications 1 à 6.

10. Procédé d'estampage d'une face interne de son tuyau selon la revendication 9, dans lequel après une réintroduction du coin (20) le poinçon d'estampage (6) est glissé vers l'avant jusqu'au point où le motif d'estampage sur la partie conique du poinçon d'estampage concorde à nouveau avec l'estampage ou l'estampage partiel de la face interne du tuyau et dans lequel lors de la poursuite de l'avance du coin (20) l'estampage de la partie conique est terminé et une nouvelle pièce est soumise à un estampage ou pré-estampage.
